# FASCICULE DE BREVET EUROPEEN

(11) **EP 2 922 447 B1**
(45) Date de publication et mention de la délivrance du brevet: **30.11.2016**
(21) Numéro de dépôt: 13779258.6
(22) Date de dépôt: 18.09.2013
(51) Int. Cl.: A47J 31/36, A47J 31/40

(54) **DISPOSITIF DE PREPARATION DE BOISSON PAR INFUSION DE DOSETTE AVEC BERCEAU PIVOTANT**
VORRICHTUNG ZUM ZUBEREITEN VON GETRÄNKEN DURCH BEHÄLTERINFUSION MIT EINER SCHWENKWIEGE
DEVICE FOR PREPARING BEVERAGES BY POD INFUSION HAVING A PIVOTING CRADLE

(30) Priorité: 23.11.2012 FR 1261196
(43) Date de publication de la demande: 30.09.2015
(73) Titulaire: Technopool Sarl, 06340 La Trinite (FR)
(72) Inventeur: FERRIER, Christian, F-06340 Cantaron (FR)
(74) Mandataire: Domange, Maxime
(86) Numéro de dépôt international: PCT/FR2013/052143
(87) Numéro de publication internationale: WO 2014/080097

(56) Documents cités:
- EP-A1- 1 859 714
- WO-A1-95/17121
- WO-A2-2008/012316

## Description

La présente invention concerne un dispositif de préparation de boisson par infusion de dosette de poudre contenant des arômes à extraire à travers laquelle on injecte un liquide, de préférence de l'eau.

Plus particulièrement, la présente invention concerne un dispositif de ce type adapté pour une dosette présentant une forme de pastille plate ou ovoïde, ladite pastille pouvant être entourée d'une collerette plate périphérique à circonférence essentiellement circulaire s'étendant dans un plan axial de section essentiellement circulaire de ladite dosette. On entend par « plate » ou « ovoïde », que la dosette en section perpendiculaire au dit plan axial de section circulaire, présente deux faces symétriques avec une partie plate ou lenticulaire de part et d'autre dudit plan axial. De façon connue, ladite dosette est constituée de 2 demi-enveloppes formant deux demi-coquilles réunies entre elles à leur périphérie pour former ladite collerette, ladite collerette prolongeant radialement ladite enveloppe et, de préférence, venant de matière radialement avec le reste de ladite enveloppe.

Plus particulièrement, la présente invention concerne un dispositif de préparation de boisson à partir de dosettes de poudre contenant des arômes, de préférence une poudre compactée, ladite dosette comprenant une enveloppe, de préférence en matériau souple poreux ou micro perforé, de préférence du type papier filtre, remplie de ladite poudre.

Ce type de dosette est essentiellement utilisé dans des machines à café traditionnelles porte-filtres dans lesquelles on place manuellement la dosette à plat, horizontalement, dans un porte dosette nécessitant de retirer manuellement la dosette après usage. Des dosettes et dispositifs de ce type sont notamment décrits dans FR 2 424 726.

On connait des machines semi-automatiques dans lesquelles l'éjection de la dosette se fait sans l'intervention manuelle de l'utilisateur du fait que, entre autre, la dosette est introduite dans la machine dans le sens vertical permettant son éjection par gravité.

Toutefois, dans les machines décrites dans l'art antérieur, notamment dans EP 1 859 714, il est nécessaire de mettre en oeuvre une dosette avec une collerette rigidifiée, notamment une collerette en carton, mais plus généralement une dosette dont l'enveloppe est relativement rigide nécessitant de percer ladite enveloppe pour pouvoir en extraire les arômes contenus à l'intérieur de la dosette par injection de liquide à travers la dosette.

Plus particulièrement, dans EP 1 859 714, le dispositif comprend :
- une première pièce formant piston, et
- une deuxième pièce comprenant à son extrémité un compartiment d'extraction et d'éjection ouvert en partie basse, adjacent à un compartiment d'insertion ouvert en partie supérieure, et apte à retenir la dosette par sa partie basse, et
- des moyens de déplacement en translation relative horizontale coaxiale desdites première et deuxième pièces, tels que ladite première pièce traverse une ouverture latérale sur la face avant du compartiment d'insertion et transfère la dosette dans le compartiment d'extraction et d'éjection adjacent. Pendant son transfert entre les deux compartiments, la dosette est retenue par des picots sur la surface du piston transperçant sa paroi d'enveloppe. Puis, une fois dans le compartiment d'extraction adjacent, la dosette est retenue par pinçage de sa collerette entre la première pièce et un rebord latéral périphérique du compartiment d'extraction et d'éjection constituant la face avant de la deuxième pièce. C'est le pinçage de la collerette qui assure l'étanchéité entre les deux première et deuxième pièces dans une chambre d'extraction confinant le compartiment d'extraction et d'éjection dans lequel on injecte le liquide à travers la dosette, dont la paroi a été percée par lesdits picots.

Le dispositif décrit dans EP 1 859 714 n'est cependant pas approprié pour la mise en oeuvre lorsque l'enveloppe et la collerette de la dosette sont réalisées en papier car il faut que la collerette et la paroi de la dosette présentent une certaine résistance et rigidité pour ne pas se déchirer et empêcher la chute de la dosette lorsque sa collerette est pincée, en dépit du poids de la dosette, lorsque celle-ci n'est pas retenue en partie basse comme c'est le cas dans le compartiment d'éjection.

Enfin, si la dosette n'est pas retenue par des éléments de perçage de sa paroi lors de son transfert entre les deux compartiments, elle n'est pas empêchée de chuter par gravité quand elle arrive dans le compartiment d'éjection avant le pinçage final de la collerette dans le compartiment d'éjection.

De telles propriétés mécaniques ne sont pas nécessairement satisfaites avec une collerette de papier poreux de faible grammage, tel que 12 à 50 g/m² comme c'est le cas dans les dosettes en papier perméable au liquide traditionnelles.

En pratique, EP 1 859 714 est spécialement adapté pour des dosettes à capsules rigides dont la paroi doit être percée d'une part et d'autre part dont la collerette au moins présente une certaine rigidité pour reprendre rapidement sa position après pliage, une fois la contrainte de pliage terminée, et pour supporter un pinçage sans entrainer de déchirure une fois dans le compartiment d'éjection.

Dans US 5 776 527, on décrit également un dispositif apte à recevoir une dosette verticalement et permettre son éjection semi-automatique par gravité sans intervention manuelle de l'utilisateur. Cependant, dans un tel cas, la dosette est maintenue verticale entre deux éléments formant des rainures. Ces éléments sont disposés latéralement de chaque côté de la dosette et légèrement inclinés de sorte qu'ils retiennent et soutiennent la collerette de la dosette. Et, par pivotement latéral des deux éléments autour d'un axe parallèle à l'axe longitudinal commun des deux pièces, il est possible de libérer et éjecter par gravité la dosette après extraction des arômes qu'elle contient. Toutefois, il y a lieu de mettre en oeuvre des moyens additionnels de pivotement des éléments de retenue de la dosette. En outre, dans US 5 776 527, là encore l'étanchéisation de la chambre d'extraction requiert le pinçage de la collerette sur toute sa périphérie. Ce dispositif requiert ainsi la mise en oeuvre d'une dosette avec au moins une collerette relativement rigide, à savoir en pratique une collerette en carton, en outre, le dispositif de US 5 767 527 ne comprenant pas d'éjecteur interne, la collerette peut rester collée dans le dispositif si le carton la constituant s'est ramolli de manière excessive, perturbant ainsi l'évacuation de la dosette.

On connait encore d'autres machines aptes à recevoir une dosette en position verticale appliquant des systèmes d'évacuation de la dosette par pivotement de la tête de sortie du liquide dans son entier, tels que décrits dans EP 1 219 217.

Une telle machine est complexe et coûteuse à réaliser dans la mesure où les seuls moyens de translation mis en oeuvre pour la compression et le confinement de la dosette dans une chambre d'extraction sont insuffisants pour permettre l'éjection de la dosette après extraction, la mise en oeuvre de moyens d'oscillation additionnels étant requise.

Dans WO 2010/149468, on décrit un dispositif de préparation de boisson aromatisée, notamment à base d'arômes de café, apte à extraire des arômes par infusion d'une dosette de poudre en contenant, ledit dispositif comprenant :
- une première pièce mâle comprenant au moins une partie cylindrique formant un piston, et
- une deuxième pièce femelle comprenant un corps délimitant une chambre interne à paroi cylindrique de même axe longitudinal (XX') que ledit piston, ladite deuxième pièce femelle comprenant, en avant de ladite chambre cylindrique interne, un compartiment d'insertion formant un berceau apte à recevoir ladite dosette avec sa collerette en position parallèle au plan de l'ouverture avant de ladite chambre, et
- des premiers moyens de déplacement en rotation relative et translation relative horizontale coaxiale XX' desdites première pièce male et deuxième pièce femelle, l'ensemble de ladite deuxième pièce et dudit berceau étant initialement incliné vers le haut, avant de pivoter vers le bas puis être déplacé en translation relative par rapport à ladite première pièce mâle traversant l'ouverture latérale dudit berceau pour comprimer ladite dosette au fond de ladite chambre pour obtenir une position de fermeture étanche dans laquelle ladite partie cylindrique de ladite première pièce mâle est située à l'intérieur de ladite chambre interne, délimitant un compartiment étanche, dénommé chambre d'extraction, à l'intérieur de ladite chambre interne, dans laquelle ladite pastille est apte à être comprimée.

Ce dispositif est relativement complexe car il requiert des moyens de pivotement de l'ensemble de la deuxième pièce femelle et dudit berceau, d'une deuxième pièce femelle avec une chambre interne et des moyens de translation de la première pièce male à l'intérieur de ladite chambre interne ainsi que des moyens de translation combinés d'un éjecteur au fond de la chambre pour permettre la sortie de ladite dosette après extraction au fond de ladite chambre.

D'autre part, dans WO 2010/149468, le fond du berceau de stockage de la dosette dans la partie supportant la partie basse de la collerette, ne retient la collerette que localement en deux points, par des moyens de retenue 33 disposés symétriquement, et non pas sur toute sa périphérie inférieure. Il en résulte que, dans le dispositif selon WO 2010/149468, la dosette n'est pas toujours maintenue parfaitement en position coaxiale par rapport au cylindre et au piston, notamment lorsque la collerette de la dosette s'affaisse et/ou lorsque le diamètre de la collerette varie d'une dose à l'autre. En effet, dans ces deux cas, il peut y avoir un désaxage de la dosette par rapport à l'axe coaxial du piston et du cylindre.

Dans WO 2010/149468, le fond de la gorge du berceau soutient la bordure périphérique de la collerette sur sa demi-circonférence inférieure, ce qui ne permet pas d'éviter l'effondrement de la collerette dans son compartiment d'insertion, à cause de sa souplesse, et ne la maintient donc pas en position appropriée centrée par rapport à l'axe desdites première pièce mâle et deuxième pièce femelle, de sorte que la collerette pliée ne rentre pas bien dans son logement entre le piston et la chambre en position de fermeture. Plus précisément, lorsque le diamètre de la collerette est légèrement supérieur à celui prévu initialement dans la configuration du berceau, il se produit un léger désaxage de la dosette par rapport à l'axe du cylindre et du piston, de sorte que des coincements peuvent intervenir, soit initialement lors de la compression, soit lors de l'éjection. Dans le brevet WO 210/149468, ce problème est accentué du fait que le berceau ne comporte pas un fond inférieur plein.

L'objet de la présente invention consiste en un dispositif amélioré plus simple et plus fiable dans son fonctionnement.

Un autre objet de la présente invention est de fournir un dispositif de ce type qui soit particulièrement adapté pour être mis en oeuvre avec des dosettes dont la collerette et la paroi de l'enveloppe sont réalisées en matériau souple, poreux ou micro perforé, de faible grammage, notamment de 12 à 50 g/m² de préférence de type papier filtre.

Pour ce faire, la présente invention fournit un dispositif de préparation de boisson aromatisée, notamment à base d'arômes de café, apte à extraire des arômes par infusion d'une dosette de poudre en contenant, ladite dosette présentant une forme de pastille plate ou ovoïde, remplie de ladite poudre, ledit dispositif étant apte à extraire les arômes contenus dans ladite poudre lorsque ladite dosette est traversée par un liquide, de préférence de l'eau sous pression, dans une chambre d'extraction, ledit dispositif comprenant :
- une première pièce comprenant une partie avant cylindrique comprenant une face avant comprenant une première surface avant d'appui périphérique, entourant une première surface de révolution non cylindrique avant, et
- une deuxième pièce comprenant une partie avant cylindrique de même axe longitudinale axiale (XX') que la partie avant cylindrique de ladite première pièce, comprenant une face avant disposée en vis-à-vis de la face avant de la première pièce, comprenant une deuxième surface avant d'appui périphérique entourant une deuxième surface de révolution non cylindrique avant, et
- une troisième pièce montée en pivotement apte à pivoter par rapport à un axe s'étendant dans une direction transversale (YY') perpendiculaire au dit axe longitudinal (XX'), ladite troisième pièce étant apte à pivoter de manière synchronisée avec une translation relative des deux première et deuxième pièces, ladite troisième pièce comprenant un orifice, de préférence en partie au moins circulaire, dans un plan P s'étendant dans une dite direction transversale (YY'), apte à être traversé par ladite partie avant cylindrique de ladite première pièce lorsque ledit plan P dudit orifice de ladite troisième pièce est en position verticale, et
- des moyens de déplacement en translation relative horizontale coaxiale (XX') desdites première pièce et deuxième pièce et pivotement synchronisé de ladite troisième pièce, entre :
- une position initiale d'ouverture et d'insertion dans laquelle lesdites première et deuxième pièces sont en éloignement maximal en translation, ladite troisième pièce étant située en position inclinée entre lesdites première et deuxième pièces, le plan (P) dudit orifice étant en position d'inclinaison maximale, de préférence d'un angle (α) de 10 à 30°, par rapport à un plan vertical transversal (YZ) perpendiculaire audit axe longitudinal (XX'), ladite troisième pièce en position d'inclinaison maximale délimitant avec la face avant de ladite première pièce un compartiment d'insertion apte à recevoir et supporter ladite dosette, celle-ci pouvant être insérée par gravité dans ledit compartiment d'insertion ouvert en partie supérieure, et
- une position de fermeture ou rapprochement maximal en translation relative des deux première et deuxième pièces dans laquelle lesdites première et deuxième surfaces périphériques d'appui desdites faces avant desdites première et deuxième pièce sont en appui l'une contre l'autre, lesdites face avant de ladite première pièce et face avant de ladite deuxième pièce délimitant un compartiment étanche, dénommé chambre d'extraction, à l'intérieur laquelle ladite pastille est apte à être comprimée pour réaliser une dite extraction, le plan P dudit orifice étant en position verticale et traversé par au moins ladite partie avant cylindrique de ladite première pièce en dite position de fermeture, et
- une position de réouverture et évacuation par éloignement en translation des deux première et deuxième pièces délimitant un compartiment d'évacuation, ledit compartiment d'évacuation étant apte à recevoir ladite dosette, ladite dosette pouvant être évacuée par gravité après une dite extraction en dehors dudit compartiment d'évacuation ouvert en partie inférieure.

On entend ici par en «avant» ou «arrière» de la première pièce et des éléments qui lui sont solidaires tels que ledit berceau, ladite dosette et ledit châssis décrits ci-après, des positions relatives au sens de déplacement en translation de l' « arrière » vers l' »avant » lors de ladite translation depuis une position d'ouverture vers une position de fermeture dans la direction longitudinale axiale XX', et un déplacement de l' « arrière » vers l' « avant » lors de la translation depuis une dite position de fermeture vers une dite position de réouverture et d'évacuation. Inversement, on entend par en «avant» ou «arrière» de la deuxième pièce des positions relatives dans la direction longitudinale axiale XX', «avant» étant plus proche de la première pièce et «arrière» plus éloigné de la première pièce, le compartiment d'insertion étant situé immédiatement à l'avant de ladite première pièce et le compartiment d'évacuation étant immédiatement à l' « avant » de ladite deuxième pièce.

On comprend également que :
- la partie supérieure couverte dudit compartiment d'insertion et la partie inférieure ouverte dudit compartiment d'évacuation présentent dans les deux directions longitudinale XX' et transversale YY' des dimensions supérieures à celles de ladite dosette pour permettre son insertion dans ledit compartiment d'insertion et son évacuation dudit compartiment d'évacuation, et
- ledit compartiment d'insertion présente dans sa partie inférieure, une ouverture inférieure moins large dans ladite direction longitudinale axiale XX' que la largeur de ladite pastille dans laquelle ladite collerette est insérée sans être pliée de manière à ce que la dosette reste dans ledit compartiment d'insertion, en dite position inclinée du berceau.

On comprend que lorsque ladite dosette est en position dans ladite chambre d'extraction, ladite pastille comprend deux faces opposées avant et arrière plates et verticales en section dans un plan axial longitudinal du dispositif et de préférence présente une section circulaire en section dans un plan axial de la dosette transversal perpendiculaire à ladite direction axiale longitudinale du dispositif

On comprend que ladite troisième pièce est apte à pivoter de manière synchronisée entre une position d'inclinaison maximale et une position verticale:
- depuis une position d'inclinaison maximale en dite position d'ouverture jusqu'à une position verticale en dite position de fermeture avec le plan dudit orifice en position verticale, lors de ladite translation depuis une position d'ouverture jusqu'à une dite position de fermeture, ledit orifice étant traversé par ladite partie avant cylindrique de ladite première pièce et ladite dosette étant apte à traverser ledit orifice de ladite troisième pièce sous l'effet de la translation relative de ladite première pièce à travers ledit orifice de ladite troisième pièce, lors de ladite translation depuis une position d'ouverture jusqu'à une dite position de fermeture dès que le plan dudit orifice est en position verticale, puis
- depuis une dite position de fermeture avec le plan dudit orifice en position verticale jusqu'à une position d'inclinaison maximale lors de ladite translation depuis une position de fermeture jusqu'à une dite position d'ouverture initiale.

Le pivotement de la troisième pièce en inclinaison maximale dans ladite position initiale d'ouverture est nécessaire pour retenir et supporter la partie inférieure de la dosette dans le compartiment d'insertion entre la face avant de la première pièce et la face arrière de la troisième pièce tandis que le pivotement en position verticale est nécessaire pour autoriser le passage de la première pièce à travers ledit orifice de la troisième pièce pour que la face avant de la première pièce vienne en appui de la face avant de la deuxième pièce et réalise ladite chambre d'extraction.

On comprend que :
- ladite troisième pièce présente une inclinaison identique dans la position d'insertion de la dosette et la position d'éjection de la dosette, et la rotation de ladite troisième pièce se fait automatiquement concomitamment au déplacement relatif en translation desdites première et deuxième pièces, et
- le déplacement de ladite troisième pièce comprend une étape dans laquelle l'orifice de ladite troisième pièce est traversé par ladite première ou deuxième pièce après avoir été traversé par ladite partie pleine en forme de pastille de ladite dosette, et
- ladite collerette de la dosette est apte à se plier lorsque ladite dosette traverse ledit orifice sous l'effet de la translation relative de ladite première pièce.

Ladite troisième pièce peut être montée sur un châssis commun supportant les trois pièces ou être solidaire d'une des deux première et deuxième pièces.

Dans un mode préféré de réalisation, ledit dispositif comporte :
a- une dite première pièce apte à être déplacée en translation à l'aide desdits moyens de déplacement en translation relative, et
b- une dite deuxième pièce qui n'est pas apte à être déplacée en translation à l'aide desdits moyens de déplacement en translation relative, et
c- une dite troisième pièce montée à pivotement sur un châssis commun supportant les trois pièces, ladite première pièce étant guidée en translation relative par des premiers éléments de guidage solidaire dudit châssis, ladite troisième pièce comprenant des éléments de guidage et pivotement, coopérant avec des éléments de guidage complémentaires solidaires de ladite première pièce et dudit châssis, de telle sorte que ladite translation relative de la première pièce sur une partie de sa course entraine ledit pivotement de ladite troisième pièce.

Plus particulièrement, ladite troisième pièce est guidée en rotation par des éléments de guidage solidaires de ladite troisième pièce et déplacée le long d'éléments de guidage complémentaires formant un chemin de guidage tel qu'un chemin rainuré non entièrement horizontal c'est-à-dire comportant au moins une partie qui ne s'étend pas dans la direction horizontale axiale de translation relative desdites première et deuxième pièces, lesdits éléments de guidage complémentaires étant solidaires dudit châssis et permettant de guider et de contrôler la translation et le pivotement de ladite troisième pièce lorsqu'on déplace en translation relative lesdites première et deuxième pièces.Plus particulièrement encore, lesdits éléments de guidage de pivotement mâles de ladite troisième pièce coopèrent avec lesdits éléments de guidage femelles complémentaires en forme de rainure solidaires de ladite première pièce et dudit châssis de telle sorte que ladite translation relative de la première pièce sur une partie de sa course entraine la translation de ladite troisième pièce simultanément à la translation de ladite première pièce mais sans pivotement de ladite troisième de telle sorte que lors de la réouverture dudit dispositif, ladite troisième pièce soit entrainée en translation avec ladite première pièce, ladite troisième pièce restant avec le plan P de son dit orifice en position verticale jusqu'à ce que l'espace entre ladite première pièce et ladite deuxième pièce soit supérieur à l'épaisseur de ladite pastille.

Plus particulièrement encore, ledit orifice de ladite troisième pièce est délimité par une surface périphérique arrière de ladite troisième pièce en vis-à-vis de ladite première pièce en dite position initiale d'ouverture, de préférence une surface périphérique arrière en partie au moins tronconique, apte à soutenir au moins dans sa partie inférieure tronconique, la partie périphérique bombée de la pastille remplie de poudre de ladite dosette sur une face avant de la dosette, la partie supérieure de ladite surface périphérique arrière délimitant ledit orifice supportant la partie supérieure de la collerette , la face arrière de la même partie périphérique bombée de la partie pleine en forme de pastille de ladite dosette en position inclinée dans ledit compartiment d'insertion étant en appui contre une partie inférieure de ladite première surface de révolution non cylindrique avant, de préférence tronconique, de ladite première pièce.

Selon d'autres caractéristiques particulières :
- ladite première pièce comprend une partie avant à surface externe cylindrique d'axe longitudinale axiale (XX') dont la face frontale avant forme une première surface avant d'appui périphérique, de préférence verticale, entourant une première surface de révolution non cylindrique avant, de préférence tronconique, ladite première surface de révolution non cylindrique avant entourant une première surface centrale interne en retrait, ladite première surface centrale étant de préférence encore perforée ou recouverte d'une première plaque perforée pour répartir l'arrivée d'eau sous pression injectée à travers ladite première surface centrale vers ladite chambre d'extraction, et
- ladite deuxième pièce comprend une partie avant à surface externe cylindrique de même axe longitudinale axiale (XX') dont la face frontale avant forme une deuxième surface avant d'appui périphérique entourant une deuxième surface de révolution non cylindrique avant, de préférence tronconique, ladite deuxième surface de révolution non cylindrique avant entourant une deuxième surface centrale interne en retrait, ladite deuxième surface centrale étant de préférence perforée ou recouverte d'une deuxième plaque perforée apte à filtrer le liquide après ladite extraction et avant son évacuation à travers ladite deuxième pièce.

Plus particulièrement, lesdites première et deuxième surfaces de révolution tronconiques avant entourant ladite première et respectivement deuxième surface centrale, présentent des diamètres croissants depuis lesdites première et respectivement deuxième surfaces centrales jusqu'aux dites première et respectivement deuxième surfaces périphériques d'appui avant.

On comprend que lesdites première et deuxième surfaces centrales internes et dites première et deuxième surfaces de révolution non cylindriques périphériques avant constituent des surfaces d'appui contre la partie pleine de la dosette, lesdites surfaces centrales internes étant en appui contre les parties centrales des faces latérales avant et arrière de la pastille de ladite dosette, et lesdites première et deuxième surfaces non cylindriques périphériques avant étant en appui contre tout le pourtour des parties périphériques bombées de la partie pleine en forme de pastille de la dosette, lorsque ladite dosette est comprimée dans ladite chambre d'extraction en dite position de fermeture.

Lesdites surfaces d'appui avant des faces avant des première et deuxièmes pièces présentent une section transversale circulaire dans un plan transversal perpendiculaire à la direction axiale longitudinale XX', de forme annulaire.

La forme tronconique desdites première et deuxième surfaces de révolution avant périphériques est particulièrement avantageuse pour décoller et dégager la dosette desdites surfaces centrales d'appui sous l'effet de l'extension desdits premier et deuxième éjecteurs décrits ci-après, et pour permettre l'éjection par gravité de ladite dosette lorsque l'on retourne à une dite position d'ouverture depuis une dite position de fermeture. En effet, ces surfaces tronconiques limitent les surfaces de contact avec les parties périphériques bombées de la pastille.

Les perforations de la deuxième plaque perforée permettent la filtration et le passage du liquide sous pression chargé d'arômes après avoir traversé la dosette dans la chambre d'extraction, puis l'évacuation du liquide par un conduit d'évacuation,

Dans un mode préféré de réalisation, le volume de la chambre d'extraction en dite position de fermeture est réglable en réglant l'avancée de ladite partie avant (2-2) de la deuxième pièce dans ladite direction longitudinale (XX') avec une molette, indépendamment de ladite translation relative de ladite première pièce à l'aide desdits moyens de déplacement en translation.

Cette caractéristique est particulièrement avantageuse car elle permet d'ajuster à volonté la qualité d'extraction du café en modifiant la compression de la dosette dans la chambre d'extraction selon la qualité et densité de la mouture de café à l'intérieur de la dosette et selon la concentration en arôme recherchée après extraction. Si la dosette et le café qu'elle contient sont davantage comprimés dans la chambre d'extraction, le temps d'écoulement du liquide à travers la dosette est ralenti et le liquide obtenu après extraction sera davantage concentré en arôme.

De préférence encore, ladite partie avant de ladite deuxième pièce comprend au moins une partie en matériau compressible, de préférence en matériau élastomère, de préférence encore en silicone, au moins dans ladite partie avant définissant lesdites deuxième surface avant d'appui périphérique, deuxième surface de révolution non cylindrique avant, et de préférence au moins une partie périphérique de ladite deuxième surface centrale en retrait.

Cette caractéristique est avantageuse pour réaliser une étanchéité optimale entre les deux dites première et deuxième surfaces avant d'appui en dite position de fermeture sans adjoindre de joint d'étanchéité additionnel, et cette caractéristique permet en outre de ne pas déchirer la collerette pincée entre les dites deux dites première et deuxième surfaces avant d'appui. Alternativement, si les deux dites première et deuxième surfaces d'appui avant sont en matériau rigide, elles doivent comprendre ou coopérer avec un joint d'étanchéité déformable.

Cette caractéristique est en outre avantageuse lorsque le réglage de ladite molette déplace en translation longitudinale ladite partie avant en matériau compressible de la deuxième pièce et la compressibilité dudit matériau compressible est telle que, lorsque ladite première pièce est en translation de rapprochement maximal par rapport à ladite deuxième pièce, en dite position de fermeture, la compression dudit matériau compressible autorise une avancée de ladite deuxième pièce par réglage de ladite molette.

Selon d'autres caractéristiques particulières :
- ladite première surface centrale interne en retrait comprend ou coopère avec un premier éjecteur comprenant des premiers éléments d'appui, ledit premier éjecteur étant monté sur un premier moyen de rappel élastique exerçant une poussée sur ledit premier éjecteur tels que lesdits premiers éléments d'appui du premier éjecteur sont aptes à être maintenus en avant de ladite première surface centrale par ledit premier moyen de rappel élastique en dite position d'ouverture et lesdits premiers éléments d'appui du premier éjecteur sont aptes à être ramené au niveau de ladite première surface centrale en retrait lorsqu'ils sont en appui contre la dosette en dite position de fermeture, et

- ladite première surface centrale interne en retrait coopère avec un premier éjecteur comprenant des premiers éléments d'appui, ledit premier éjecteur étant monté sur un premier moyen de rappel élastique exerçant une poussée sur ledit premier éjecteur tels que lesdits premiers éléments d'appui du premier éjecteur sont aptes à être maintenus en avant de ladite première surface centrale par ledit premier moyen de rappel élastique en dite position d'ouverture et lesdits premiers éléments d'appui du premier éjecteur sont aptes à être ramené au niveau de ladite première surface centrale en retrait lorsqu'ils sont en appui contre la dosette en dite position de fermeture,
- ladite deuxième surface centrale interne en retrait comprend ou coopère avec un deuxième éjecteur comprenant des deuxièmes éléments d'appui, ledit deuxième éjecteur étant monté sur des deuxièmes moyens de rappel élastique exerçant une poussée sur ledit deuxième éjecteur tels que lesdits deuxièmes éléments d'appui du deuxième éjecteur sont aptes à être maintenus en avant de ladite deuxième surface centrale par ledit deuxième moyen de rappel élastique en dite position d'ouverture et lesdits deuxièmes éléments d'appui du deuxième éjecteur sont aptes à être ramenés au niveau de ladite deuxième surface centrale en retrait lorsqu'ils sont en appui contre la dosette en dite position de fermeture, et
- ledit deuxième éjecteur comprend une partie avant en matériau élastomère, de préférence en silicone, montée sur une tige rigide apte à coopérer avec lesdits deuxièmes moyens de rappel élastique, ladite partie avant du deuxième éjecteur comprenant une tête formant desdits deuxièmes éléments d'appui en matériau élastomère dont la face arrière est de forme tronconique apte à fermer de manière étanche l'ouverture centrale de ladite partie avant de ladite deuxième pièce lorsque ledit deuxième éjecteur y coulisse jusqu'en dite position de retrait, et ladite face arrière de la partie avant du deuxième éjecteur comprend des moyens de jonction assurant la jonction entre lesdits deuxièmes éléments d'appui avec la face arrière de ladite partie avant de ladite deuxième pièce, lesdits moyens de jonction en matériau élastomère étant apte à fermer de manière étanche l'ouverture centrale de ladite partie avant de ladite deuxième pièce ledit deuxième éjecteur lorsque ledit deuxième éjecteur y coulisse jusqu'en dite position d'extension,

- lesdits premier et deuxième éléments d'appui desdits premier et deuxième éjecteurs étant en avant desdites première et respectivement deuxième surface centrale des faces avant des première et respectivement deuxième pièces sous l'effet desdits premier et respectivement deuxième moyens de rappel, sont aptes à venir en appui contre les 2 faces avant et arrière de la dosette et la maintenir verticale en empêchant la chute de la dosette, pendant les phases intermédiaire de translation relative desdites première et deuxième pièces lors de la fermeture du dispositif avant d'arriver en dite position de fermeture et lors de la phase initiale de réouverture avant son évacuation dans ledit compartiment d'évacuation lorsque la distance entre lesdits premier et deuxième éjecteur est inférieure à l'épaisseur de ladite pastille, et
- les surfaces de l'une seulement desdits premier et deuxième éléments d'appui aptes à venir en contact contre les deux faces opposées de la dosette, n'empêche pas la chute de la dosette par gravité lorsque les deux première et deuxième pièces sont suffisamment éloignées par dite translation relative pour former un dit compartiment d'évacuation.

On comprend que :
- les surfaces desdits premier et deuxième éléments d'appui aptes à venir en contact contre les deux faces opposées de ladite dosette sont insuffisantes pour que la dosette y reste appliquée par adhésion, et
- en dite position d'ouverture, lesdits premiers éléments d'appui peuvent être en partie en contact avec la dosette mais ne sont pas en appui contre la dosette, et
- en dite position de fermeture lesdits premier et deuxième moyens de rappel sont comprimés.

Plus particulièrement encore, lesdits premiers éléments d'appui sont des branches supérieure et inférieures s'étendant radialement disposées angulairement selon une forme et disposition, de préférence 1 branche supérieure médiane et deux branches inférieure latérales disposées à 120° par rapport à la branche supérieure, telles que :
- en dite position d'ouverture, lors de l'insertion de ladite dosette dans ledit compartiment d'insertion, ladite dosette vient tout d'abord buter seulement contre ladite branche supérieure sans entrer en contact avec lesdites branches inférieures, ladite branche supérieure guidant la chute de la dosette contre ladite surface périphérique arrière de ladite troisième pièce, et
- en dite position d'ouverture, lorsque la face avant de la partie périphérique bombée de la pastille remplie de poudre de ladite dosette est en appui contre ladite surface périphérique arrière de ladite troisième pièce, en position inclinée dans ledit compartiment d'insertion, la face arrière de ladite dosette est en contact avec la partie inférieure de ladite surface périphérique non cylindrique de la face avant de ladite première pièce mais sans contact avec ni ladite branche supérieure ni lesdites branches inférieures.

Plus particulièrement encore, qu'en dite position d'insertion, ledit compartiment d'insertion comprend un espace ouvert formant une fente entre la partie inférieure de la face arrière dudit berceau et la partie inférieure de la face avant de ladite première pièce, ladite fente étant apte à être traversée par une collerette de la dosette lorsque la dosette est insérée dans ledit compartiment d'insertion.

Ce mode de réalisation est particulièrement avantageux lorsque ladite dosette comprend une dite pastille entourée d'une collerette plate périphérique s'étendant dans un plan axial transversal de ladite pastille, ladite collerette étant apte à se plier par rapport au dit plan axial lorsque ladite dosette passe à travers ledit orifice de ladite troisième pièce, ladite dosette présentant de préférence une section essentiellement circulaire dans ledit plan axial, et ladite collerette étant apte à être pincée entre lesdites surfaces d'appui périphériques avant desdites première et deuxième pièces en appui l'une contre l'autre en dite position de fermeture.

Plus particulièrement encore, ledit berceau forme un anneau dont l'orifice (3-1) est délimité par une surface arrière périphérique dont la partie supérieure 3-5 présente une demie circonférence oblongue apte à soutenir continument la partie supérieure de ladite collerette (10b) et dont la partie inférieure (3a) présente une demie circonférence inférieure semi circulaire apte à soutenir continument la partie inférieure de la face avant (10c) de la partie pleine bombée de ladite pastille (10a) lorsque ladite dosette est dans le compartiment d'insertion en dite position d'ouverture, ledit orifice étant bordé par deux rebords latéraux (3b) aptes à maintenir latéralement ladite collerette coaxialement audit axe longitudinale (XX') au moins entre lesdites partie supérieure (3-5) et inférieure (3a) de ladite surface arrière périphérique délimitant ledit orifice.

Plus particulièrement encore, lesdits moyens de translation relative sont aptes à déplacer ladite première pièce mobile par rapport à une dite deuxième pièce, ladite première pièce étant fixée à un châssis, ledit châssis assurant le guidage en translation relative longitudinale coaxiale de la première pièce mobile par rapport à la ladite deuxième pièce fixe et le guidage en translation et rotation relative de ladite troisième pièce, et lesdits moyens de translation relative comprennent un système de biellettes actionnable manuellement par un levier ou de façon motorisée de préférence par un vérin, ledit système de biellettes assurant la liaison cinématique en translation de ladite première pièce par rapport audit châssis.

On comprend que :
- ledit compartiment d'insertion présente-dans sa partie inférieure, une ouverture inférieure ou fente entre la partie inférieure du berceau et la partie inférieure de la face avant de la première pièce, moins large dans ladite direction longitudinale axiale XX' que la largeur de ladite pastille dans laquelle ladite collerette est insérée sans être pliée de manière à ce que la dosette reste dans ledit compartiment d'insertion , en dite position inclinée du berceau.

Ladite dosette est soutenue en sous face de la partie inférieure de la partie périphérie bombée de la partie pleine en forme de pastille de ladite dosette sur ses deux faces lorsque celle-ci est insérée dans ledit compartiment d'insertion, la partie inférieure dudit berceau en position inclinée arrive à une hauteur sensiblement au même niveau que la partie inférieure de la face avant de la première pièce; et par rotation en position verticale la partie inférieure du berceau est dégagée dessous ladite première pièce pour permettre que celle-ci puisse traverser l'orifice dudit berceau.

Le bord périphérique souple de la collerette de la dosette se plie à 90° lors de son passage à travers l'orifice de la troisième pièce et se replace verticalement avant enfermement de ladite pastille dans la chambre d'extraction par translation relative des deux première et deuxième pièces. D'autre part, ladite collerette peut se prolonger localement par une extension radiale formant une languette.

Le dispositif selon la présente invention est avantageux en ce qu'il permet de mettre en oeuvre une dosette ordinaire comprenant une enveloppe en matériau souple poreux ou micro perforé, et donc relativement fragile une fois mouillée, de préférence du type papier filtre, sans qu'il soit requis que la collerette ne soit en carton renforcé.

On entend par «plate ou ovoïde» que la dosette présente deux faces symétriques avec une partie plate ou lenticulaire de part de d'autre de son plan diamétral, lequel est aussi le plan de la collerette.

Plus particulièrement, la dosette est constituée de deux demi-enveloppes formant deux demi-coquilles réunies entre elles à leur périphérie, notamment collées l'une contre l'autre, pour former ladite collerette, ladite collerette prolongeant radialement ladite enveloppe et, de préférence, venant de matière avec le reste de ladite enveloppe.

Le diamètre externe de ladite première pièce est légèrement inférieur au diamètre ou dimensions de l'orifice dudit berceau, pour qu'elle puisse le traverser. En revanche, le diamètre interne dudit orifice légèrement supérieur à celui de la partie pleine de poudre en forme de pastille de la dosette, et inférieur au diamètre maximal de la collerette, de sorte qu'en cas de translation relative de la première pièce depuis ladite position d'ouverture vers ladite position de fermeture, ladite collerette se plie transitoirement.

Plus particulièrement encore, lorsque les moyens de translation relative comprennent un levier situé par-dessus ladite première pièce femelle et un système de biellettes, un système de courroies et poulies ou engrenages assure la transmission du mouvement de rotation du levier au système de biellettes.

La présente invention fournit également, un procédé d'utilisation d'un dispositif selon l'invention, caractérisé en ce qu'on réalise les étapes successives suivantes :
1- on insère par gravité une dite dosette en position inclinée dans un dit compartiment d'insertion, lesdites première pièce et deuxième pièce étant en dite position d'ouverture et d'insertion, une face de la dosette en périphérie bombée de la partie pleine en forme de pastille de ladite dosette étant en appui sur la partie inférieure de ladite surface arrière de ladite troisième pièce inclinée (α), l'autre face de la dosette en périphérie bombée de la partie pleine en forme de pastille de ladite dosette étant en appui contre une partie inférieure de ladite surface de révolution non cylindrique avant de la face avant de ladite première pièce, puis
2- on réalise une translation relative de rapprochement des deux dites première pièce et deuxième pièce et une translation et rotation de ladite troisième pièce, depuis ladite position d'insertion jusqu'à une dite position de fermeture au cours de laquelle l'orifice de ladite troisième pièce en dite position verticale est traversé par ladite dosette puis par ladite première pièce, jusqu'à ce que ladite dosette se trouve comprimée dans une dite chambre d'extraction étanche, puis
3- on réalise une injection de liquide depuis ladite première pièce dans ladite chambre d'extraction et à travers ladite dosette, puis évacuation dudit liquide de ladite chambre d'extraction à travers ladite deuxième pièce, et
4- on réalise une translation relative d'éloignement des deux dites première pièce et deuxième pièce à partir de ladite position de fermeture jusqu'à une dite position de réouverture et d'évacuation, ladite troisième pièce en position verticale étant déplacée en translation puis en rotation en dite position inclinée, ladite dosette étant déplacée dans un dit compartiment d'évacuation à partir duquel la dosette est évacuée par gravité.

Plus particulièrement, à l'étape 4, le compartiment d'évacuation est délimité par un écartement des deux éjecteurs des deux première et deuxième pièces d'une distance supérieure à l'épaisseur de ladite pastille, ladite troisième pièce étant encore en dite position verticale de son orifice traversée par ladite première pièce.

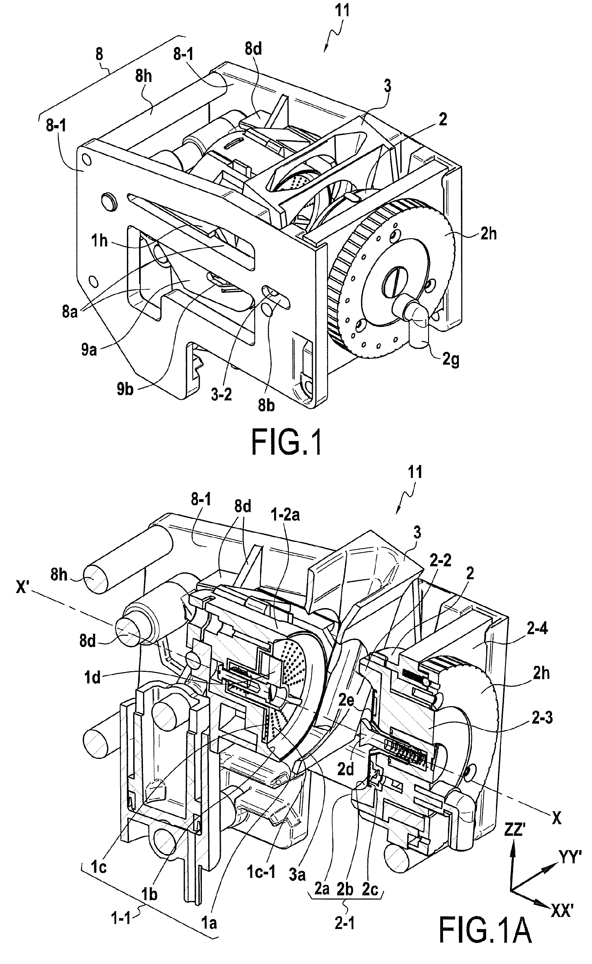

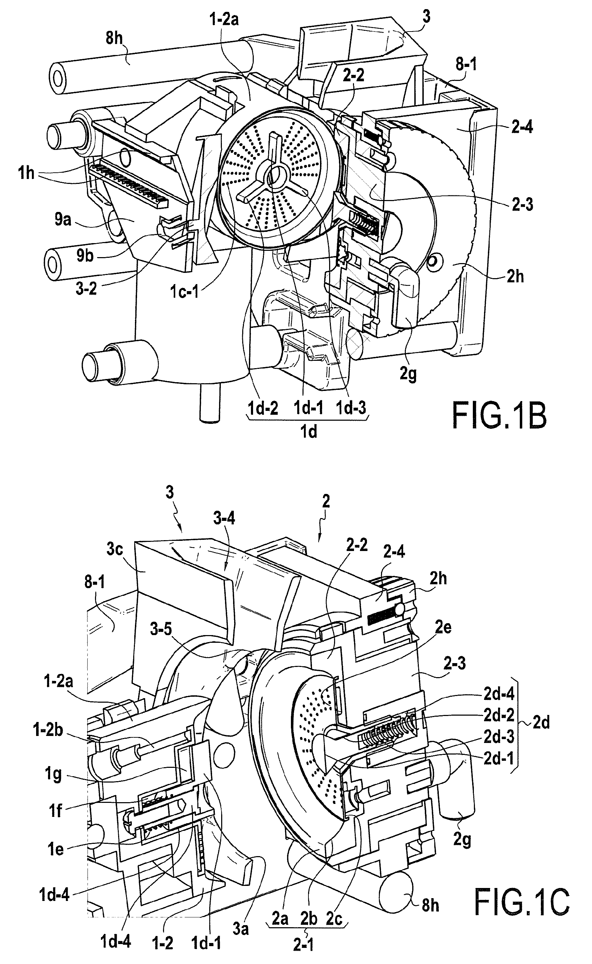

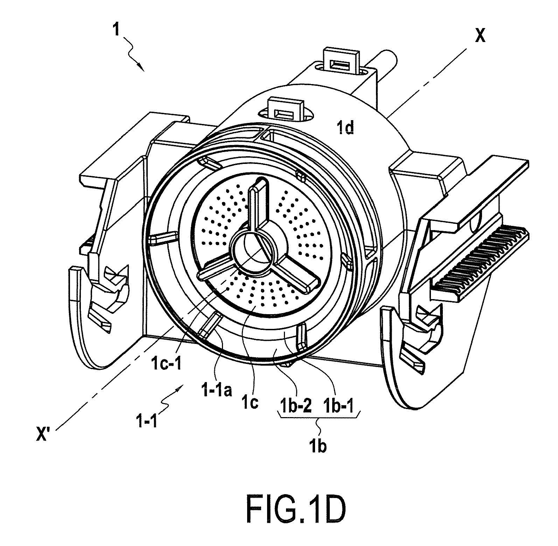

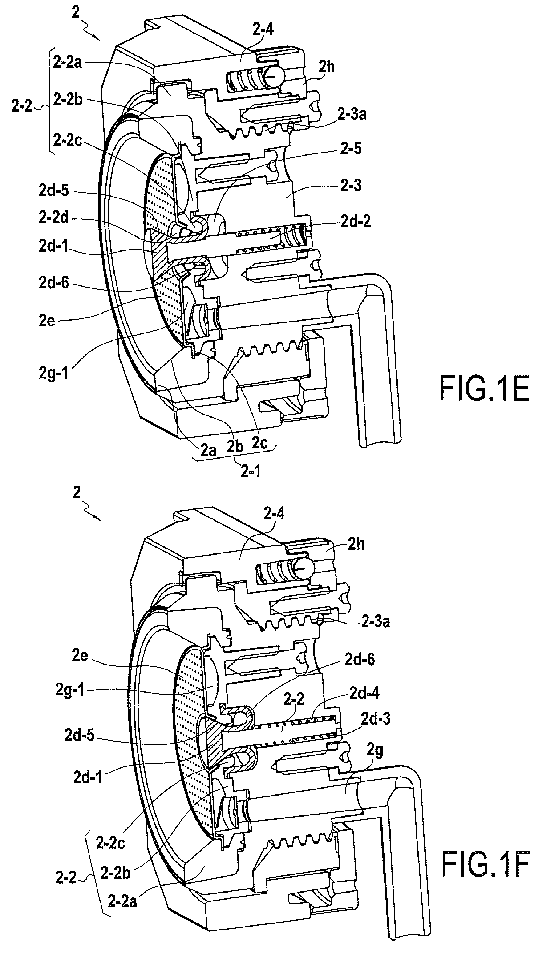

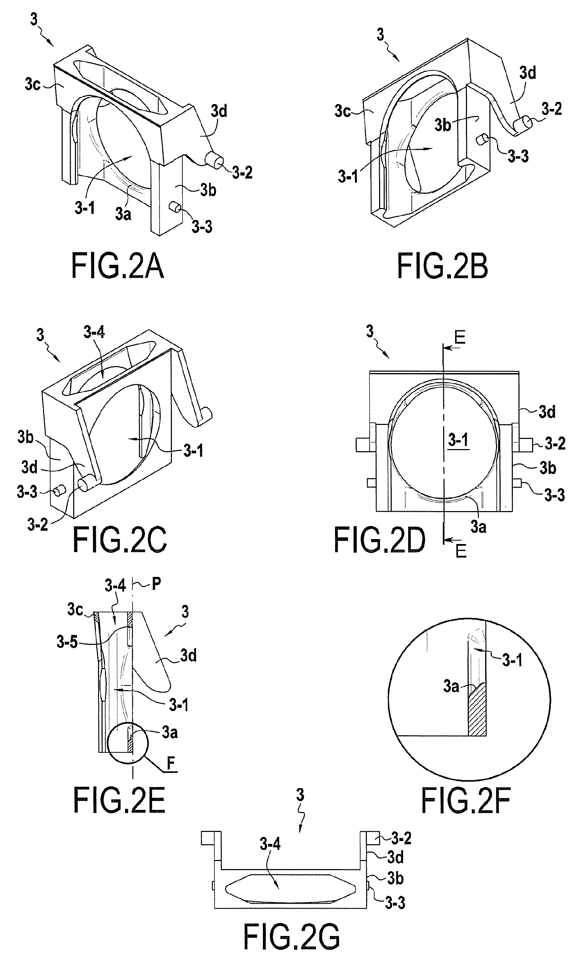

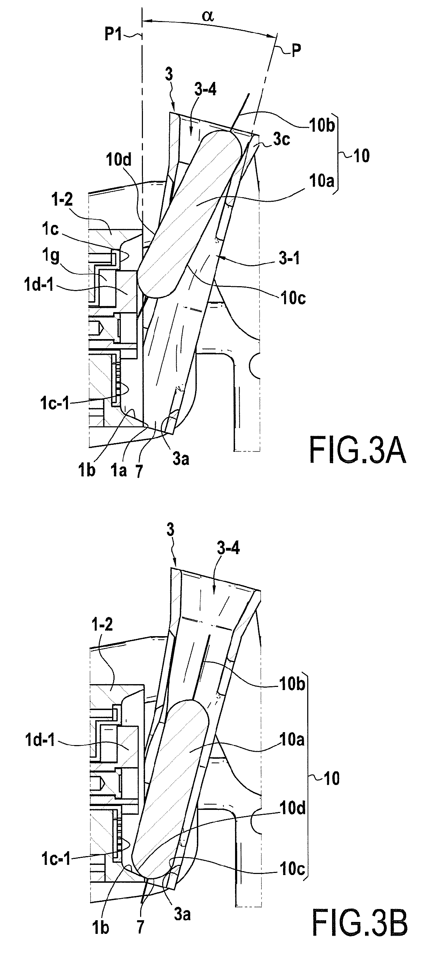

D'autres caractéristiques et avantages de la présente invention apparaîtront à la lumière de la description détaillée d'un mode de réalisation fait en référence aux figures 1 à 11 suivantes :
La figure 1 représente une vue en perspective d'un dispositif ou groupe d'extraction 11 selon la présente invention comprenant un châssis 8 supportant une dite première pièce 1 apte à être entrainée en translation relative longitudinale par déplacement d'un élément mâle de guidage 1g à l'intérieur d'une première rainure de guidage 8a des deux flancs 8-1 du châssis 8, la deuxième pièce 2 étant montée fixement en dite translation entre les deux flancs 8-1 du châssis 8 en vis-à-vis de la première pièce 1, la troisième pièce en forme de berceau pivotant 3 étant montée articulée en rotation par des premiers éléments de guidage et pivotement formant arbre de rotation 3-2 apte à être déplacée en translation dans une deuxième rainure longitudinale 8b des deux flancs 8-1 du châssis 8.
La figure 1A est une vue en perspective en coupe selon un plan longitudinal vertical médian du dispositif 11 de la figure 1.
La figure 1B est une vue en coupe partielle montrant la face avant 1-1 de la première pièce 1 en perspective.
La figure 1C est une vue en coupe montrant la face avant 2-1 de la deuxième pièce 2 en perspective.
La figure 1D est une vue en perspective montrant la face avant de ladite première pièce 1 avec des protubérances 1-1a et un premier éjecteur 1d, et
Les figures 1E et 1F sont des vues en coupe axiale de ladite deuxième pièce 2 montrant les moyens de jonction et étanchéité 2d-6 de la tête 2d-1 du deuxième éjecteur 2d par rapport à la partie avant 2-2 de la deuxième pièce 2.
Les figures 2A à 2G sont des vues de la troisième pièce 3 en perspective en vue arrière de dessus (figure 2A), en perspective en vue arrière de dessous (figure 2B), en perspective en vue avant (figure 2C), en vue de face arrière (figure 2D), en vue de côté (figure 2E), en détail de la partie inférieure de la surface tronconique d'appui 3a (figure 2F) et en vue de dessus du guide dosette (figure 2G).
Les figures 3A et 3B sont des vues en coupe de l'insertion de la dosette dans ledit compartiment d'insertion pendant la chute de la dosette (figure 3A) et une fois la dosette en place contre la partie inférieure de la surface tronconique arrière du berceau pivotant (figure 3B).
Les figures 4A, 4B et 4C représentent des vues en coupe et de côté de la position initiale d'ouverture d'inclinaison maximale, position de translation arrière maximale de la première pièce 1.
Les figures 5A, 5B et 5C représentent des vues d'une position intermédiaire de translation avant de la première pièce 1 et de la troisième pièce 3 inclinées selon une inclinaison réduite du fait des translation et pivotement synchronisés de la troisième pièce 3 lorsque l'élément de butée formant axe de rotation 3-2 de la troisième pièce 3 est en butée à l'extrémité avant de la deuxième rainure 8b du châssis 8.
Les figures 6A, 6B et 6C sont des vues d'une position intermédiaire dans laquelle ladite troisième pièce étant en position verticale avec la dosette maintenue sur chacune de ses faces par les premier et deuxième éjecteurs desdites première et deuxième pièce lors d'une phase intermédiaire de translation relative vers l'avant de la première pièce 1 vers la deuxième pièce 2 lors de la fermeture du groupe d'extraction.
Les figures 7A, 7b et 7C sont des vues du groupe d'extraction en dite position de fermeture, la dosette étant comprimée dans ladite chambre d'extraction.
Les figures 8A et 8B sont des vues montrant la chambre d'extraction réglée selon un plus grand volume (figure 8A) et selon un plus petit volume (figure 8B) par réglage de la molette 2h.
Les figures 9A, 9B et 9C sont des vues du groupe d'extraction 11 lors de la réouverture du groupe d'extraction dans une phase initiale d'éjection/évacuation de la dosette, ledit berceau pivotant 3 étant en position verticale lors de la translation arrière initiale de la pièce 1, la dosette étant maintenue verticale en position coaxiale par les deux éjecteurs 1d et 2d et l'écartement D2 entre les deux pièces 1 et 2 étant insuffisant pour autoriser l'évacuation de la dosette.
Les figures 10A, 10B et 10C sont des vues de translation arrière suivantes montrant la chute de la dosette de son compartiment d'évacuation, la troisième pièce ou berceau pivotant 3 étant en position verticale. Le plan P de l'orifice 3-1 du berceau ayant rejoint le plan P1 limite de la face avant de la première pièce, l'écartement D3 entre les premières pièces 1 et 2 étant supérieur à l'épaisseur D de la dosette, la dosette n'étant plus en contact avec l'éjecteur 1d autorisant l'évacuation de la dosette du compartiment d'évacuation 6.
Les figures 11a, 11B et 11C sont des vues représentant le groupe 11 en réouverture par translation maximale d'éloignement d'une distance D1 des deux pièces 1 et 2, le berceau 3 étant en position d'inclinaison maximale.

Le terme "berceau" est ici employé pour signifier que la pièce concernée est une pièce de soutien de forme incurvée.

Les termes "avant" et "arrière" en liaison avec les première et deuxième pièces ont été définis précédemment.

Pour le berceau 3, la face avant est la face en vis-à-vis de la deuxième pièce tandis que la face arrière est la face en vis-à-vis de la première pièce en dite position initiale d'ouverture.

Le dispositif selon l'invention appelé groupe d'extraction 11 comprend un châssis 8 constitué de 2 flancs latéraux 8-1 s'étendant dans des plans longitudinaux dans les directions XY parallèles entre eux espacés et reliés par des tiges transversales 8h s'étendant dans la direction transversale YY'. Entre les flancs 8-1 sont disposées une première tête appelée tête d'entrée 1 et une deuxième tête appelée tête de sortie 2. Les première tête 1 et deuxième tête 2 présentent des parties avant 1-2 et 2-1 cylindriques disposées en vis-à-vis coaxialement dans la direction longitudinale XX'.

La première pièce ou tête d'entrée 1 présente une partie avant 1-2 à surface externe cylindrique dont la face avant 1-1 en vis-à-vis de la face avant 2-1 de la deuxième pièce 2 est constituée de :
- Une première surface avant d'appui périphérique la annulaire plate à section circulaire s'étendant dans un plan transversal P1 perpendiculaire à la direction axiale longitudinale XX', et
- Une première surface centrale interne 1c à section circulaire dans un plan transversal XY, de plus petit diamètre que ladite première surface avant d'appui périphérique la, et disposée en retrait dans la direction longitudinale XX' par rapport à celle-ci et coaxialement selon l'axe longitudinal XX', et
- Une première surface tronconique avant 1b assurant la jonction entre la circonférence circulaire de ladite première surface centrale interne 1c et ladite première surface avant d'appui périphérique 1a.
- La première surface d'appui avant 1a est donc délimitée par une circonférence circulaire externe constituée par l'extrémité avant de ladite surface cylindrique externe 1-2a de la partie avant 1-2 et délimitée par le plus grand diamètre de l'extrémité avant de ladite première surface avant tronconique 1b arrivant sensiblement dans un même plan P1 vertical transversal dans une direction XY que ladite première surface d'appui avant 1a de ladite face avant 1-1 de la première pièce 1.

En d'autres termes, ladite première surface avant d'appui périphérique 1a est constituée par l'extrémité en pointe de la jonction de ladite première surface tronconique avant 1b et de ladite surface externe cylindrique 1-2a.

Sur la figure 1D, on a représenté 6 protubérances 1-1a créant des nervures en relief sur la surface de révolution non cylindrique 1b comprenant deux parties tronconiques adjacentes 1b-1 et 1b-2. Les protubérances 1-1a s'étendent dans la direction axiale longitudinale XX' de la première pièce 1 et sont régulièrement espacés angulairement sur tout le pourtour circulaire des dites surfaces de révolution non cylindrique 1b en section dans un plan perpendiculaire à l'axe XX'. Ces protubérances 1-1a empêchent l'adhérence par effet ventouse de la dosette en contact avec la petite surface d'appui 1b du fait que ladite dosette n'est pas entièrement en contact avec ladite surface 1b au niveau des zones immédiatement adjacentes aux dites protubérances 1-1a. Ces protubérances 1-1a facilitent donc l'éjection de la dosette au même titre que le premier éjecteur 1d décrit ci-après en empêchant que la dosette ne se colle par effet ventouse sur la surface 1b ce qui risquerait d'empêcher l'évacuation de la dosette par gravité en dite position finale d'évacuation tel que décrit ci-après.

La deuxième pièce 2 comprend une partie avant 2-2 cylindrique constituée d'une pièce en matériau silicone compressible et présentant une face avant 2-1 présentant en section dans un plan transversal XY une circonférence. La face avant 2-1 de ladite pièce en matériau silicone 2-2 forme :
- Une dite deuxième surface avant d'appui périphérique 2a annulaire plate, formant une surface d'appui destinée à venir en appui contre une première surface avant d'appui périphérique 1a de la première pièce 1 décrite ci-après en vis-à-vis de laquelle elle est toujours située, et
- Une deuxième surface centrale 2c interne, plane à circonférence circulaire en section transversale dans un plan XY, disposée coaxialement selon la direction longitudinale XX', en retrait par rapport à ladite deuxième surface avant d'appui périphérique 2a, le diamètre de la circonférence de ladite deuxième surface centrale 2c étant plus petit que le diamètre interne de ladite deuxième surface avant d'appui périphérique annulaire 2a, et
- Une deuxième surface tronconique avant 2b assurant la jonction entre la circonférence interne de ladite deuxième surface avant d'appui périphérique annulaire 2a et la circonférence externe de ladite deuxième surface centrale interne en retrait 2c.

Ladite deuxième surface centrale interne en retrait 2c supporte une deuxième plaque perforée 2e à circonférence circulaire dans un plan transversal XY disposé coaxialement selon l'axe longitudinal XX' devant ladite deuxième surface centrale 2c.

La deuxième pièce 2 comprend au moins un corps périphérique externe 2-4 fixé latéralement sur chacune des 2 parois latérales 8-1 du châssis. Le corps externe 2-4 entoure ledit corps central 2-3 et coopère avec celui-ci grâce à une molette arrière 2h comme décrit plus loin. Le corps central 2-3 de la deuxième pièce 2 est traversé par un conduit d'évacuation 2g depuis des espaces vides 2g-1 derrière la deuxième plaque perforée 2e et débouchant de l'autre côté à l'arrière du corps 2-3. La plaque perforée 2e fait office de filtre pour que seul le liquide enrichi en arome soit évacué par le conduit d'évacuation 2g derrière ladite plaque 2e.

Le corps 2-3 comprend une cavité cylindrique centrale 2d-4 disposée coaxialement dans la direction longitudinal XX' au sein de laquelle est fixé un moyen de rappel élastique 2d-3 coopérant avec la tige 2d-2 d'un dit deuxième éjecteur 2d présentant une tête à section circulaire 2d-1 dans un plan transversal XY traversant une perforation centrale de ladite deuxième plaque perforée 2e et apte à être actionnée élastiquement dans la direction longitudinale XX'. En position d'extension du ressort 2d-3 comme montré figure 1C et figure 1E, la tête 2d-1 du deuxième éjecteur 2d est sortie en avant de ladite deuxième plaque 2e tout en restant en retrait du plan transversal P2 de ladite deuxième surface avant d'appui périphérique 2a perpendiculaire à la direction axiale longitudinale XX'.

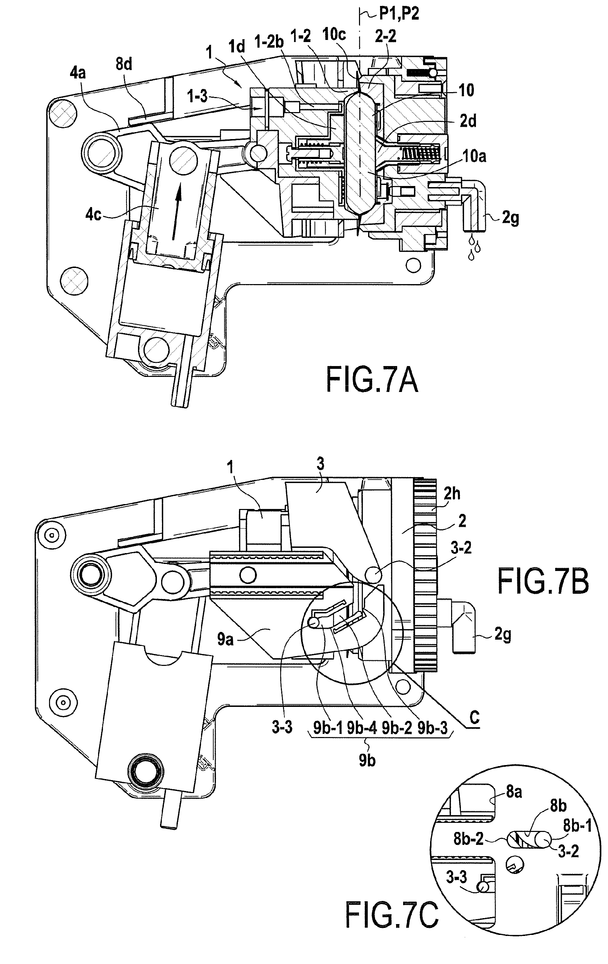

En appuyant dans la direction longitudinale XX' sur la tête 2d-1 du deuxième éjecteur 2d, le ressort 2d-3 se comprime et l'éjecteur 2d rentre dans la cavité cylindrique 2d-4 du corps 2-3 comme montré sur les figures 1F et 7A de telle sorte que la surface avant plane de circonférence circulaire de la tête 2d-1 arrive dans le même plan que ladite deuxième plaque 2e devant la deuxième surface centrale interne 2c.

Sur les figures 1E et 1F, on va montrer un mode de réalisation de la tête formant des deuxièmes éléments d'appui 2d-1 du deuxième éjecteur 2d réalisé en silicone venant recouvrir la tige rigide 2d-2 et se prolongeant par une collerette arrière 2d-6 en silicone dont l'extrémité est fixée sur la face arrière de ladite partie avant 2-2 de la deuxième pièce 2 débouchant dans une cavité 2-5 entre le corps central 2-3 et sa partie avant 2-2. La cavité 2-5 débouche sur un orifice central 2-2d de la partie avant 2-2 de la deuxième pièce 2 traversé par la tige 2d-2 recouverte de la partie arrière en silicone de la tête 2d-1.

Ce mode de réalisation est avantageux pour préserver l'étanchéité de la cavité 2d-4 renfermant le ressort 2d-3.

En effet, en position d'extension de l'éjecteur 2d la surface tronconique arrière 2d-5 en silicone de la tête 2d-1 formant les deuxième éléments d'appui est espacée vers l'avant par rapport à l'orifice 2-2d, mais l'étanchéité de la cavité 2d-4 et du ressort 2d-3 est préservée car la collerette de jonction en silicone 2d-6 est en serrage étanche contre une partie 2-2c de la face arrière de la partie avant 2-2 de la deuxième pièce 2. Et, lorsque le deuxième éjecteur 2d est en position de retrait avec le ressort 2d-3 comprimé, la partie arrière tronconique 2d-5 de la tête 2d-1 du deuxième éjecteur vient buter contre la surface périphérique délimitant l'ouverture centrale 2d-2d de ladite partie avant 2-2 de la deuxième pièce 2 et assurer la fermeture étanche du dit orifice 2-2d. Ces fermetures étanches de l'orifice central 2-2d en position d'extension et en position de retrait du deuxième éjecteur 2d sont avantageuses car ainsi le café ne peut pas stagner dans la cavité 2d-4 et cohabiter avec le ressort, ce qui pourrait à la longue générer le développement de bactérie et également bloquer le deuxième éjecteur en le collant.

Ladite première surface centrale interne en retrait 1c est disposée coaxialement en vis-à-vis de ladite deuxième surface centrale interne en retrait 2c présentant les deux surfaces 1c et 2c présentant sensiblement le même diamètre. De même, ladite première surface avant tronconique 1b et ladite deuxième surface tronconique avant 2b présentent sensiblement les mêmes diamètres, et sont disposés sensiblement symétriquement par rapport à leur plan transversal de jonction lorsque la première surface avant d'appui périphérique 1a et la deuxième surface avant d'appui périphérique 2a sont en butée et en appui contre l'une contre l'autre par translation relative de rapprochement maximal de ladite première pièce 1 par rapport à deuxième pièce 2.

La première pièce 1 coopère avec le châssis 8 par l'intermédiaire d'éléments de guidage mâle 1h de chaque côté de la première pièce 1, guidant en translation dans la direction longitudinale YY' la première pièce 1 du fait que lesdits éléments mâles de guidage 1h sont insérés dans des rainures longitudinales de guidage réalisées par évidements 8a de chaque paroi latérale 8-1 du châssis 8.

La partie avant cylindrique 1-2 de la première pièce 1 comprend une cavité cylindrique 1f centrale disposée coaxialement selon l'axe longitudinal XX'. A l'intérieur de la cavité 1e est monté un moyen de rappel élastique 1e coopérant avec une tige 1d-4 d'un premier éjecteur 1d, dont ladite tige 1d-4 porte à son extrémité avant 3 branches 1d-1, 1d-2, 1d-3 disposées radialement à 120° dont une branche supérieure 1d-1 dans un plan axial longitudinal XZ et deux branches inférieures latérales 1d-2 et 1d-3 disposées symétriquement par rapport au dit plan axial longitudinal XZ.

La première surface centrale interne en retrait 1c comporte trois cavités ou logements 1g aptes à recevoir les trois branches 1d-1, 1d-2, 1d-3 lorsqu'on exerce une poussée sur lesdites trois branches 1d-1, 1d-2, 1d-3 en comprimant le ressort 1e. En position d'extension vers l'avant du ressort 1e, les trois branches 1d-1, 1d-2, 1d-3 arrivent dans la direction longitudinale XX' en avant de ladite première surface en retrait 1c mais toujours en arrière du plan P1 limite de la première face d'appui périphérique 1a délimitant ladite face avant 1-1 de la première pièce 1.

La première surface interne en retrait 1c est avantageusement recouverte d'une première plaque perforée comprenant des perforations 1c-1 entre lesdits trois logements 1g disposés à 120°. Le corps cylindrique 1-2 de la première pièce 1 est traversé par un conduit d'alimentation 1-2b, les différentes perforations 1c-1 de la plaque recouvrant la première surface centrale en retrait 1c permettent de répartir uniformément le liquide injecté à travers ladite première face frontale 1-1 de la première pièce 1.

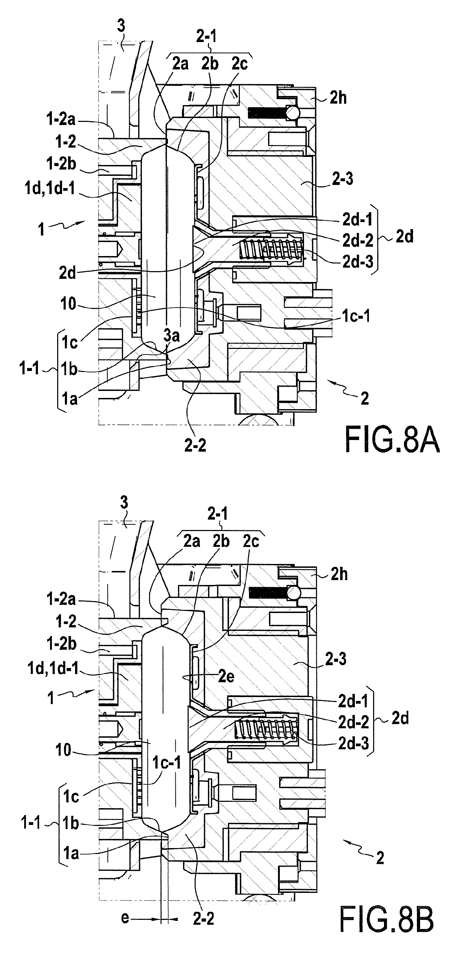

La deuxième pièce 2 comporte une molette arrière 2h périphérique à l'arrière des corps externes 2-4 et du corps central 2-3 et autour du corps central 2-3. Ladite molette 2h est vissée sur un filetage 2-3a de la surface externe cylindrique du corps 2-3 de tel sorte qu'en vissant la molette 2h on peut déplacer vers l'avant le corps 2-3 entrainant la partie avant 2-2 en matériau silicone de la deuxième pièce 2. La partie avant 2-2 en silicone vient s'écraser contre la première surface avant d'appui 1a de la première pièce 1 lorsque celle-ci est en appui contre la deuxième surface avant d'appui périphérique 2a en silicone comme montré figure 8A. La molette 2h permet d'avancer ou de reculer la tête de sortie 2 de quelques millimètres ce qui est rendu possible par la compressibilité de sa deuxième surface avant d'appui périphérique 2a en silicone. Par réglage de la molette 2h, la surface réduite par sa forme en pointe de ladite première surface avant périphérique 1a s'enfonce dans la surface en silicone de ladite deuxième surface avant d'appui périphérique 2a comme montré figure 8B. Le réglage de la molette 2h permet ainsi de régler la distance entre la première surface centrale en retrait 1c et la deuxième surface centrale en retrait 2c et donc permet de régler le volume de la chambre d'extraction décrite ci-après. Ceci permet d'ajuster la quantité d'arôme extraite du café contenu dans la dosette en modifiant la compression de la dosette 10 dans la chambre d'extraction et donc en modifiant le temps d'écoulement du liquide à travers ladite dosette lors de l'étape d'extraction décrite ci-après. Ceci permet également d'adapter la chambre d'extraction à différents types de dosettes variables en épaisseur et/ou en diamètre et/ou contenant des moutures de café plus ou moins fines et/ou plus ou moins compactées.

Le fait de pouvoir ajuster la compression de la dosette en modifiant le volume de la chambre d'extraction et donc le temps d'écoulement du café à travers la dosette, est un atout majeur et original de la présente invention.

La première pièce 1 comporte de chaque côté et en vis-à-vis de chaque face interne des parois latérales 8-1 du châssis 8, des plaques 9a. Ces plaques 9a comprennent des rainures 9b qui assurent le guidage des deuxième éléments mâles de guidage 3-3 de la troisième pièce 3 permettant de forcer le pivotement du berceau 3 autour des premiers éléments mâles de guidage et pivotement 3-2 formant axe de rotation engagé dans des rainures réalisées par évidements 8b des parois latérales 8-1 du châssis 8 de chaque côté de celui-ci tel que décrit ci-après.

Le berceau pivotant 3 forme un anneau délimitant une ouverture en partie circulaire ou ovale 3-1 avec au moins une partie inférieure semi-circulaire, le plan P de ladite ouverture s'étendant au moins dans une direction transversale YY'.

Le berceau pivotant 3 est monté en liaison cinématique avec la première pièce 1, translation et pivotement synchronisé comme décrit ci-après.

L'orifice 3-1 est délimité en partie inférieure par une surface tronconique sur la face arrière dudit anneau de diamètre tel que la partie inférieure de ladite surface arrière tronconique est apte à soutenir continument la partie inférieure bombée périphérique de la pastille pleine 10c d'une dosette 10 sur sa face avant 10c et la partie supérieure 3-5 est apte à soutenir la partie supérieure de la collerette 10b.

Ladite surface tronconique 3a est bordée latéralement par des rebords latéraux 3b aptes à maintenir latéralement la collerette 10b entourant la pastille pleine 10a de la dosette 10 pour la maintenir dans l'axe XX' dudit orifice correspondant à l'axe XX' desdites première et deuxième pièces lorsque ledit berceau pivotant est en position de pivotement avec le plan P dudit orifice disposé verticalement dans une direction XY.

Le berceau pivotant 3 comprend deux premiers éléments de pivotement 3-2 formant axe de rotation s'étendant dans la direction transversale YY' disposé de chaque côté dudit berceau pivotant et coopérant avec des deuxièmes rainures de guidage réalisées par évidements 8b s'étendant rectilignement et longitudinalement dans la direction XX' dans les deux parois latérales 8-1 du châssis 8.

Plus précisément, les premiers éléments de pivotement 3-2 formant un axe de rotation sont supportés par des jupes latérales 3d d'un guide formant trémie d'insertion 3c délimitant une ouverture 3-4 en partie supérieure du berceau au-dessus dudit orifice 3-1 et en arrière de celui-ci. Les premiers éléments de pivotement 3-2 formant axe de rotation sont disposés en avant des deuxièmes éléments mâles de guidage et pivotement 3-3 guidés dans les rainures de guidage réalisées par évidements 9b.

Les rainures de guidage 9b comprennent une partie rectiligne 9b-1 s'étendant dans la direction longitudinale XX' et qui se prolonge vers l'avant de la première pièce par une partie de rainure inclinée 9b-2 montante, se terminant à son extrémité supérieure par une butée 9b-3 empêchant une translation vers l'avant des deuxièmes éléments mâles de guidage et de pivotement 3-3.

Les dispositions relatives des rainures de guidage 8b solidaires du châssis 8 en avant et au-dessus des rainures de guidage 9b, 9b-1, 9b2 des plaques 9a solidaires de la première pièce 1, permettent une translation et pivotement synchronisés du berceau pivotant 3 tel que décrit ci-après.

La translation longitudinale de la première pièce 1 est obtenue avec des moyens de translation 4 comprenant des systèmes de biellettes 4a, 4b dont une biellette 4a présente une extrémité 4a-1 solidaire du châssis 8, l'autre biellette 4b présente une extrémité 4b-1 solidaire de la première pièce 1. Les deux biellettes sont reliées entre elles et articulées en rotation à leur autre extrémité par un élément de liaison articulé en rotation 4d. Un vérin hydraulique 4c permet d'actionner en rotation lesdites biellettes. Du fait que la première pièce 1 est guidée en translation longitudinale dans les rainures longitudinales 8a du châssis 8, l'actionnement en rotation du système de biellette entraine ladite translation longitudinale de la première pièce 1.

Les moyens de translation relatifs 4 de la première pièce 1 par rapport à la deuxième pièce 2 peuvent être réalisés par tout autre système motorisé à vis ou came ou autre à la place du système de biellette décrit ci-dessus. Le vérin 4c peut être remplacé ou complété par un levier actionnable manuellement non représenté.

Du fait que le berceau pivotant 3 est rendu solidaire du châssis 8 par ses premiers éléments de pivotement 3-2 formant arbre de rotation et ses deuxièmes éléments de guidage 3-3 formant butée dans des rainures de guidage 9b solidaires de la première pièce 1, la translation relative de la première pièce 1 par rapport à la deuxième pièce 2 entraine la translation et/ou le pivotement du berceau pivotant 3 comme décrit ci-après.

En position initial d'écartement maximal D1 en translation relative de la première pièce 1 par rapport à la deuxième pièce 2, les premiers éléments de pivotement 3-2 formant arbre de rotation sont en butée à l'extrémité arrière des rainures de guidage 8b du châssis 8 tandis que les deuxièmes éléments mâles de guidage 3-3 sont positionnés à l'extrémité supérieure de la partie montante inclinée 9b-2 de la rainure 9b solidaire de la première pièce 1. A cette position, lesdits petits éléments de guidage 3-3 peuvent coopérer avec des clips de retenu.

Dans cette position initiale d'écartement maximal D1 en translation de la première pièce par rapport à la deuxième pièce 2, le berceau pivotant 3 se trouve en position d'inclinaison maximale avec le plan P de la face arrière plane de l'ouverture 3-1 du berceau pivotant 3 incliné d'un angle α d'environ 15° par rapport au plan P1 vertical de la face avant 1-1 de la première pièce 1 formant un compartiment d'insertion en forme de V.

Dans cette position d'écartement maximal initial, le premier éjecteur 2d est en position d'extension vers l'avant par rapport à la première surface centrale en retrait 1c sensiblement au niveau de la face avant 1-1 de la première 1.

La forme du premier éjecteur 1d permet que lorsqu'on insère la dosette 10 par l'ouverture supérieure 3-4 du guide d'insertion 3c en forme en forme de trémie, la partie inférieure de la partie périphérique bombée de la pastille 10a sur sa face arrière 10d de la dosette 10, vient buter sur la surface d'appui avant verticale de la première branche supérieure 1d-1 en position d'extension et guide le positionnement de la pastille 10a de telle sorte que la face avant 10c de sa partie périphérique bombée 10a vienne se positionner en appui contre la partie inférieure de la surface tronconique arrière 3a délimitant l'orifice 3-1 du berceau pivotant. Si la branche supérieure 1d-1 du premier éjecteur 1d ne s'étendait pas radialement sur une partie importante du rayon de la première surface centrale interne 1c de la face avant 1-1 de la première pièce, la partie inférieure de la partie bombée périphérique de la pastille 10a pourrait être retenue dans sa chute et/ou bloquée dans son insertion en butant contre ledit premier éjecteur 1d en position d'extension. La dosette se poserait en appui par-dessus ledit premier éjecteur et ne descendrait pas au fond du compartiment d'insertion 5 de la dosette en forme de V.

Les deux branches inférieures 1d-2 et 1d-3 disposées latéralement et symétriquement à 60° par rapport au plan vertical longitudinal médian XZ de la première branche 1d-1, permettent que la face arrière 10d de la partie bombée inférieure de la pastille 10a vienne en appui contre ladite première surface tronconique avant 1b de la face avant 1-1 de la première pièce 1 lorsque la face arrière 10c de la même partie bombée périphérique de la pastille 10a vient en appui contre la surface tronconique arrière 3a du berceau pivotant 3. L'angle de 120° entre les deux branches inférieures latérales 1d-2 et 1d-3 est suffisant pour laisser dégagée la partie inférieure de ladite première surface tronconique avant 1b et que la dosette ne soit pas en contact avec lesdites branches en dite position d'ouverture sans gêner l'insertion de ladite dosette au fond du compartiment d'insertion.

Dans cette position d'inclinaison maximale du berceau pivotant 3, un espace ouvert 7 formant une fente est ménagée entre la partie inférieure de ladite première surface d'appui avant 1a et la partie inférieure de la surface tronconique d'appui 3a du berceau de manière à pouvoir y loger la partie inférieure de la collerette 10b entourant la pastille 10a de la dosette 10.

Une fois que la dosette 10 est logée dans le compartiment d'insertion 5 délimité par la face avant 1-1 de la première pièce 1 et la face arrière de la surface tronconique 3a délimitant l'orifice 3-1, on peut actionner en translation relative la pièce 1 de manière à la rapprocher de la pièce 2 comme suit.

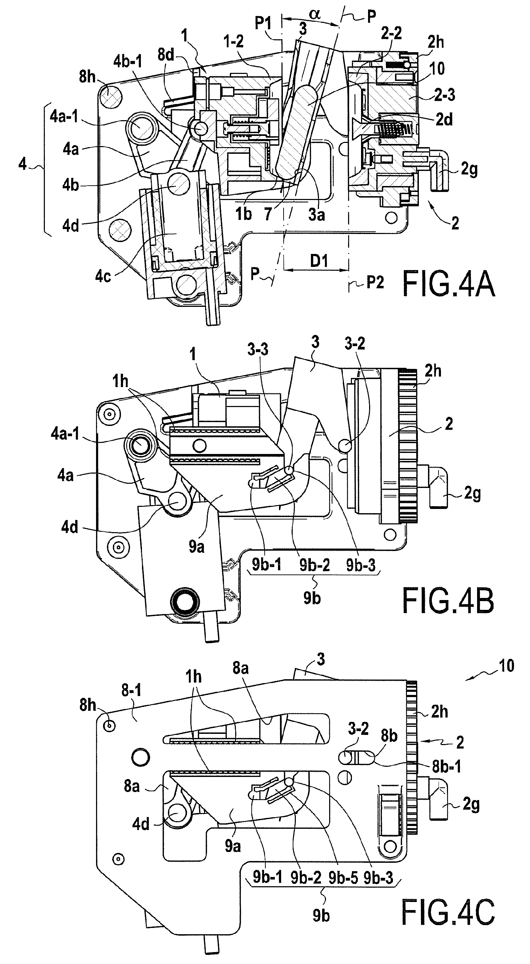

Comme montré figures 4A à 4C, du fait que les deuxièmes éléments mâles de pivotement 3-3 sont bloqués en translation par la partie 9b-3 formant butée et/ou un clip de retenue 9b-5 d'une part et que d'autre part les premiers éléments de guidage et pivotement formant arbre de rotation 3-2 peuvent coulisser librement dans la direction longitudinale XX' de la rainure de guidage 8b de forme rectiligne, le berceau pivotant 3 reste en dite position d'inclinaison maximale pendant ladite translation jusqu'à ce que les premiers éléments formant arbre de rotation 3-2 viennent buter à l'extrémité avant 8b-1 desdites rainures 8b solidaires du châssis 8.

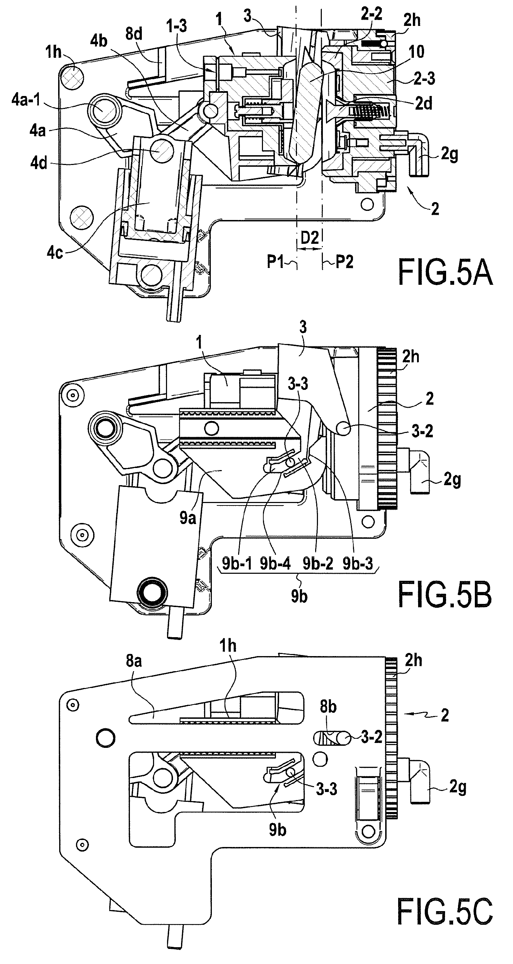

A ce stade, comme montré figures 5A à 5C, la poursuite de la translation longitudinale relative de la première pièce 1 par rapport à la deuxième pièce 2 par déplacement des éléments de guidage 1h dans la rainure 8a du châssis 8, entraine nécessairement le pivotement en translation du berceau autour de ses premiers éléments de guidage et de pivotement formant arbre de rotation 3-2 du fait que les deuxièmes éléments mâles de guidage 3-3 coulissent dans la partie de rainure inclinée 9b-2.

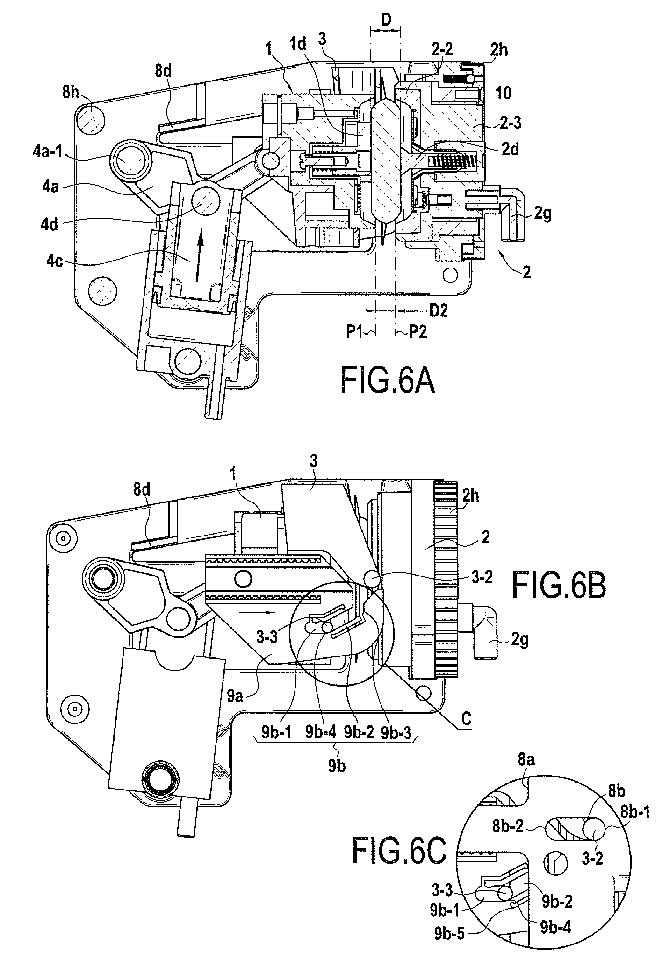

Comme montré figures 6A - 6C, la longueur de la rainure inclinée 9b-2 est telle que lorsque les deuxièmes éléments de guidage 3-3 arrivent à l'extrémité inférieure 9b-4 de ladite portion inclinée 9b-2, le berceau pivotant 3 se trouve avec le plan P de l'orifice 3-1 en position verticale entre les 2 plans verticaux P1 et P2 des première surface avant d'appui 1a et deuxième surface avant d'appui 2a des première et respectivement deuxième pièces encore espacées d'une distance D2 inférieure à l'épaisseur D de la dosette. Dans cette position intermédiaire de translation relative de la première pièce 1 par rapport à la deuxième pièce 2, la partie cylindrique avant 1-2 de la première pièce 1 est en partie passée à travers l'orifice 3-1 coaxial du berceau pivotant 3 en position verticale, entrainant avec elle la dosette 10 ainsi chassée du berceau pivotant et traversant elle aussi l'orifice 3-1. La dosette 10 est toutefois maintenue en position verticale et maintenue en hauteur avec son centre qui reste aligné coaxialement avec l'axe longitudinal XX' des deux première pièce 1 et deuxième pièce 2 par les deux éjecteurs 1d et 2d en appui contre les faces opposées 10c et 10d de la dosette.

Les surfaces de contact des deux éjecteurs 1d et 2d avec les deux faces 10c, 10d de la pastille sont suffisantes pour qu'au regard de la force d'extension des moyens de rappel des deux éjecteurs, la dosette reste disposée coaxialement.

Comme montré sur les figures 7A - 7C, lorsqu'on continue la translation relative de rapprochement de la première pièce 1 vers la deuxième pièce 2 le blocage des premiers éléments formant arbre de rotation 3-2 à l'extrémité avant des rainures de guidage 8b du châssis 8 d'une part et la forme rectiligne de la partie inférieure 9b-1 de la rainure de guidage 9b solidaire de la première pièce 1, guide en translation longitudinale le berceau pivotant 3 selon la même inclinaison avec le plan P de l'orifice 3-1 en position verticale, de sorte que le berceau pivotant reste en position verticale jusqu'à ce que la collerette 10b de la dosette 10 soit pincée entre la première surface d'appui avant la de la première pièce 1 et la deuxième surface d'appui avant 2a de la deuxième pièce 2 et dite position de fermeture.

Une fois que la pastille de la dosette est comprimée à l'intérieur de ladite chambre d'extraction en dite position de fermeture du groupe d'extraction 1, on injecte de l'eau chaude sous pression par l'orifice 1-3 du conduit d'alimentation 1-2b à travers le corps de la première pièce arrivant au niveau de la première plaque perforée 1c-1. Le liquide traverse l'épaisseur de la dosette en extrayant les aromes du café en poudre compacté à l'intérieur de la dosette puis est évacué à travers le conduit d'évacuation 2g traversant le corps 2-3 de la deuxième pièce 2 après avoir été filtré à travers la deuxième plaque perforée 2e appliquée devant la deuxième surface centrale en retrait 2c de la face avant 2-1 de la deuxième pièce 2.

Une fois l'extraction terminée, on procède à la réouverture du groupe d'extraction par translation relative en éloignement de la première pièce 1 par rapport à la deuxième pièce 2.

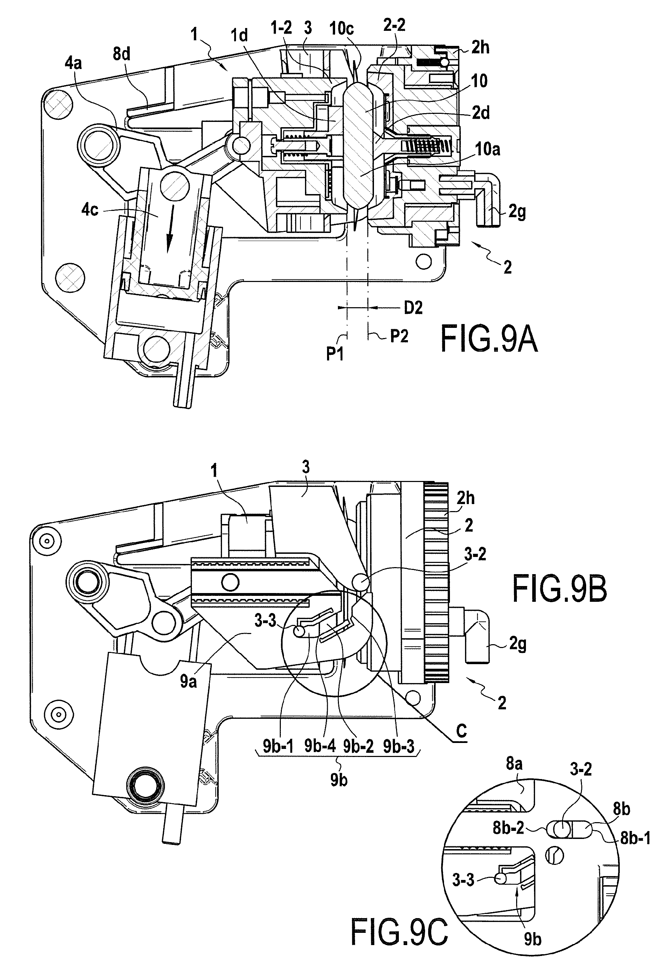

Comme montré figures 9A-9C, tant que les premiers éléments de guidage 3-2 formant axe de rotation coulissent depuis d'extrémité avant 8b-1 de la rainure 8b du châssis jusqu'à l'extrémité arrière 8b-2 de la rainure 8b du châssis, le berceau pivotant 3 est entrainé en translation arrière avec ladite première pièce sans pivoter car les deuxièmes éléments mâles de pivotement 3-3 au niveau de la rainure 9b solidaire de ladite première pièce se déplace elle aussi en translation longitudinale rectiligne depuis l'extrémité arrière de la partie rectiligne 9b-1 de ladite rainure 9b jusqu'à sa partie avant 9b-4 qu'elle atteint lorsque les premiers éléments formant axe de rotation 3-2 arrivent à l'extrémité arrière de la rainure 8b du châssis. Auparavant, l'écartement D2 entre les deux faces avant des deux premières pièces est inférieur à l'épaisseur D de la dosette, et la dosette est maintenue verticale et coaxiale par les deux éjecteurs 1d et 2d en appui contre ses faces opposés 10c et 10d.

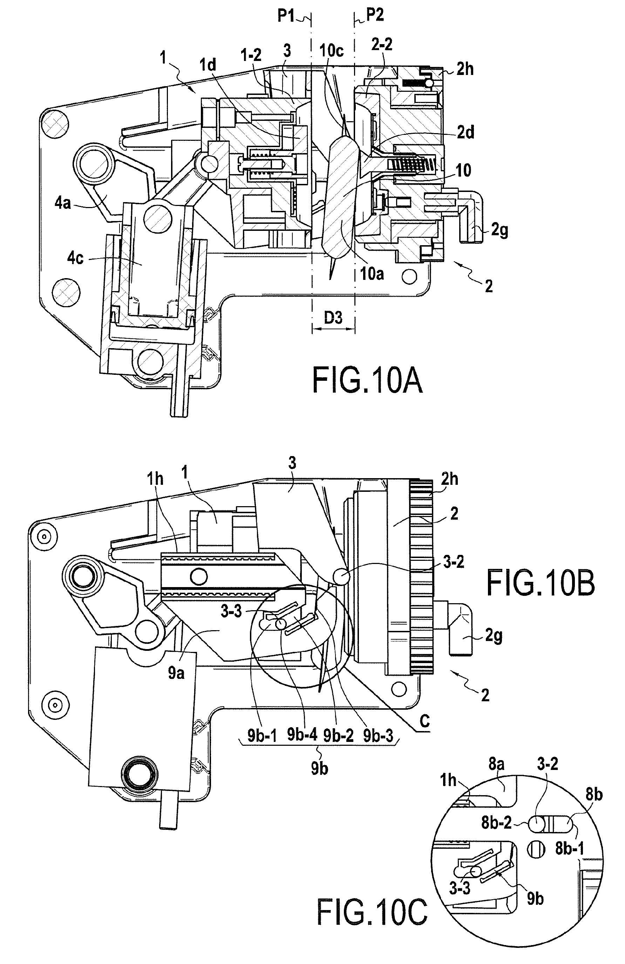

Comme représenté sur les figures 10A à 10C, ladite translation relative continue, le berceau pivotant 3 est toujours en position verticale et l'écartement D3 entre le premier éjecteur 1d et le deuxième éjecteur 2d est supérieur à l'épaisseur de la pastille dans la direction longitudinale XX'. Ainsi ladite pastille peut être évacuée tombant par gravité dans la partie inférieure ouverte du compartiment d'évacuation 6 ainsi formé, du fait que les surfaces de contact desdits premier éjecteur et deuxième éjecteur avec la dosette sont insuffisants pour que celle-ci reste collée contre l'un desdits éjecteurs.

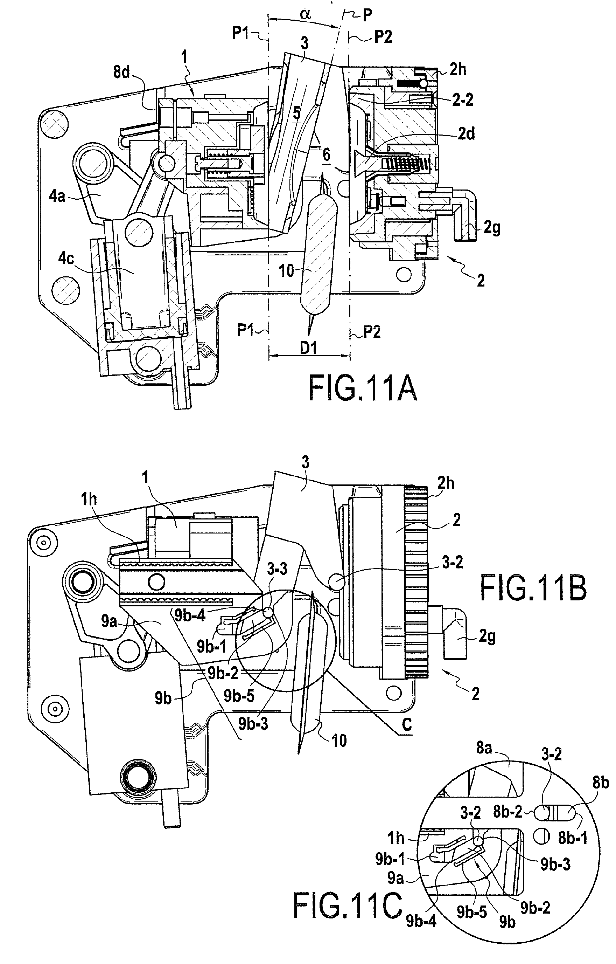

Lorsqu'on continue la translation arrière de la première pièce pour retourner à la position initiale d'ouverture avec un éloignement maximal D1 entre lesdites premières et deuxièmes pièces comme montré figures 11A-11C, le berceau pivotant pivote pour retrouver sa dite position d'inclinaison maximale. Pour ce faire, les deuxièmes éléments mâles de guidage 3-3 du berceau 3 sont guidés dans la partie montante inclinée 9b-2 de la rainure 9b solidaire de la première pièce 1, tandis que les premiers éléments de guidage et pivotement formant axe de rotation 3-2 ne peuvent plus être déplacés en translation relative arrière dans la mesure où ils sont en butée contre l'extrémité arrière 8b-2 de la rainure longitudinale 8b du châssis 8. Ce blocage des éléments 3-2 implique nécessairement le pivotement du berceau pivotant 3 lorsqu'on réalise une translation arrière de la première pièce 1 jusqu'à ce que les deuxièmes éléments mâles 3-2 du berceau guide dans la partie inclinée 9b-2 de la rainure 9b arrivent en butée contre la partie de retenue 9b-3 au sommet de la partie inclinée 9b-2 de la rainure 9b à l'avant de ladite rainure 9b. On se retrouve ainsi dans la configuration de ladite position initiale d'ouverture en inclinaison maximale du berceau pivotant.

La translation arrière maximale de la première pièce 1 par rapport à la deuxième pièce 2 est contrôlée par une butée transversale 8d solidaire dudit châssis contre laquelle une partie arrière de la première pièce 1 vient buter. Cette butée transversale arrière 8d permet également de contrôler la translation avant maximale de la première pièce 1 par butée d'un élément de butée solidaire d'une des biellettes 4a, 4b lorsqu'on actionne lesdites biellettes en rotation pour réaliser une dite translation avant.

## Revendications

1. Dispositif de préparation de boisson aromatisée (11), notamment à base d'arômes de café, apte à extraire des arômes par infusion d'une dosette (10) de poudre en contenant, ladite dosette présentant une forme de pastille (10a) plate ou ovoïde, remplie de ladite poudre, ledit dispositif étant apte à extraire les arômes contenus dans ladite poudre lorsque ladite dosette est traversée par un liquide, de préférence de l'eau sous pression, dans une chambre d'extraction, ledit dispositif comprenant :
- une première pièce (1) comprenant une partie avant cylindrique (1-2) comprenant une face avant (1-1) comprenant une première surface avant d'appui périphérique (1a), entourant une première surface de révolution non cylindrique avant (1b), et
- une deuxième pièce (2) comprenant une partie avant cylindrique (2-2) de même axe longitudinale axiale (XX') que la partie avant cylindrique (1-2) de ladite première pièce, comprenant une face avant (2-1) disposée en vis-à-vis de la face avant (1-1) de la première pièce, comprenant une deuxième surface avant d'appui périphérique (2a) entourant une deuxième surface de révolution non cylindrique avant (2b), et
- une troisième pièce (3) montée en pivotement (3-2, 3-3) apte à pivoter par rapport à un axe s'étendant dans une direction transversale (YY') perpendiculaire au dit axe longitudinal (XX'), ladite troisième pièce étant apte à pivoter de manière synchronisée avec une translation relative des deux première et deuxième pièces, ladite troisième pièce comprenant un orifice (3-1), de préférence en partie au moins circulaire, dans un plan P s'étendant dans une dite direction transversale (YY'), apte à être traversé par ladite partie avant cylindrique de ladite première pièce (1) lorsque ledit plan P dudit orifice de ladite troisième pièce est en position verticale, et
- des moyens de déplacement en translation relative (4) horizontale coaxiale (XX') desdites première pièce (1) et deuxième pièce (2) et pivotement synchronisé de ladite troisième pièce, entre :
- une position initiale d'ouverture et d'insertion dans laquelle lesdites première et deuxième pièces sont en éloignement maximal en translation (D1), ladite troisième pièce étant située en position inclinée entre lesdites première et deuxième pièces, le plan (P) dudit orifice (3-1) étant en position d'inclinaison maximale, de préférence d'un angle (α) de 10 à 30°, par rapport à un plan vertical transversal (YZ) perpendiculaire audit axe longitudinal (XX'), ladite troisième pièce (3) en position d'inclinaison maximale délimitant avec la face avant (1-1) de ladite première pièce un compartiment d'insertion (5) apte à recevoir et supporter ladite dosette, celle-ci pouvant être insérée par gravité dans ledit compartiment d'insertion ouvert en partie supérieure (3-4), et
- une position de fermeture ou rapprochement maximal en translation relative des deux première et deuxième pièces dans laquelle lesdites première et deuxième surfaces périphériques d'appui (1a ,2a) desdites faces avant (1-1,2-1) desdites première et deuxième pièce sont en appui l'une contre l'autre, lesdites face avant (1-1) de ladite première pièce et face avant (2-1) de ladite deuxième pièce délimitant un compartiment étanche, dénommé chambre d'extraction, à l'intérieur laquelle ladite pastille (10a) est apte à être comprimée pour réaliser une dite extraction, le plan P dudit orifice (3-1) étant en position verticale et traversé par au moins ladite partie avant cylindrique (1-2) de ladite première pièce en dite position de fermeture, et
- une position de réouverture et évacuation par éloignement en translation (D1, D3) des deux première et deuxième pièces délimitant un compartiment d'évacuation (6), ledit compartiment d'évacuation étant apte à recevoir ladite dosette, ladite dosette pouvant être évacuée par gravité après une dite extraction en dehors dudit compartiment d'évacuation ouvert en partie inférieure.

2. Dispositif selon la revendication 1 caractérisé en qu'il comporte :
a- une dite première pièce (1) apte à être déplacée en translation à l'aide desdits moyens de déplacement en translation relative, et
b- une dite deuxième pièce (1-2) qui n'est pas apte à être déplacée en translation à l'aide desdits moyens de déplacement en translation relative, et
c- une dite troisième pièce montée à pivotement (3-2, 3-3) sur un châssis commun (8) supportant les trois pièces, ladite première pièce (1) étant guidée en translation relative par des premiers éléments de guidage (8a) solidaire dudit châssis, ladite troisième pièce comprenant des éléments de guidage et pivotement (3-2, 3-3), coopérant avec des éléments de guidage complémentaires (8b, 9b) solidaires de ladite première pièce (9b) et dudit châssis (8b), de telle sorte que ladite translation relative de la première pièce sur une partie de sa course entraine ledit pivotement de ladite troisième pièce.

3. Dispositif selon la revendication 2 **caractérisé en ce que** lesdits éléments de guidage de pivotement mâles (3-2, 3-3) de ladite troisième pièce coopèrent avec lesdits éléments de guidage femelles complémentaires en forme de rainure (8b, 9b) solidaires de ladite première pièce (9b) et dudit châssis (8b) de telle sorte que ladite translation relative de la première pièce sur une partie de sa course entraine la translation de ladite troisième pièce simultanément à la translation de ladite première pièce mais sans pivotement de ladite troisième de telle sorte que lors de la réouverture dudit dispositif, ladite troisième pièce soit entrainée en translation avec ladite première pièce, ladite troisième pièce restant avec le plan P de son dit orifice en position verticale jusqu'à ce que l'espace (D3) entre ladite première pièce et ladite deuxième pièce soit supérieur à l'épaisseur de ladite pastille.

4. Dispositif selon l'une des revendications 1 à 3 **caractérisé en ce que** ledit orifice (3-1) de ladite troisième pièce est délimité par une surface périphérique arrière (3a) de ladite troisième pièce en vis-à-vis de ladite première pièce en dite position initiale d'ouverture (1), de préférence une surface périphérique arrière en partie au moins tronconique (3a), apte à soutenir au moins dans sa partie inférieure tronconique 3a la partie périphérique bombée (10c) de la pastille remplie de poudre (10a) de ladite dosette sur une face avant (10c) de la dosette, la partie supérieure (3-5) de ladite surface périphérique arrière délimitant ledit orifice supportant la partie supérieure de la collerette (10b), la face arrière (10d) de la même partie périphérique bombée (10a) de la partie pleine en forme de pastille de ladite dosette en position inclinée dans ledit compartiment d'insertion étant en appui contre une partie inférieure de ladite première surface de révolution non cylindrique avant (1b), de préférence tronconique, de ladite première pièce.

5. Dispositif selon l'une des revendications 1 à 4 **caractérisé en ce que** :
- ladite première pièce (1) comprend une partie avant à surface externe cylindrique (1-2) d'axe longitudinale axiale (XX') dont la face frontale avant (1-1) forme une première surface avant d'appui périphérique (1a), de préférence verticale, entourant une première surface de révolution non cylindrique avant (1b), de préférence tronconique, ladite première surface de révolution non cylindrique avant (1b) entourant une première surface centrale interne en retrait (1c), ladite première surface centrale étant de préférence encore perforée ou recouverte d'une première plaque perforée (1c1) pour répartir l'arrivée d'eau sous pression injectée à travers ladite première surface centrale vers ladite chambre d'extraction, et
- ladite deuxième pièce (2) comprend une partie avant à surface externe cylindrique (2-2) de même axe longitudinale axiale (XX') dont la face frontale avant (2-1) forme une deuxième surface avant d'appui périphérique (2a) entourant une deuxième surface de révolution non cylindrique avant (2b), de préférence tronconique, ladite deuxième surface de révolution non cylindrique avant (2b) entourant une deuxième surface centrale interne en retrait (2c), ladite deuxième surface centrale étant de préférence perforée ou recouverte d'une deuxième plaque perforée (2e) apte à filtrer le liquide après ladite extraction et avant son évacuation (2g) à travers ladite deuxième pièce.

6. Dispositif selon l'une des revendications 1 à 5 **caractérisée en ce que** le volume de la chambre d'extraction en dite position de fermeture est réglable en réglant l'avancée de ladite partie avant (2-2) de la deuxième pièce (2) dans ladite direction longitudinale (XX') avec une molette (2h), indépendamment de ladite translation relative de ladite première pièce à l'aide desdits moyens de déplacement en translation (4).

7. Dispositif selon l'une des revendications 1 à 6 **caractérisée en ce que** ladite partie avant (2-2) de ladite deuxième pièce (2) comprend au moins une partie en matériau compressible, de préférence en matériau élastomère, de préférence encore en silicone, au moins dans ladite partie avant (2-2) définissant lesdites deuxième surface avant d'appui périphérique (2a), deuxième surface de révolution non cylindrique avant (2b), et de préférence au moins une partie périphérique de ladite deuxième surface centrale en retrait (2c).

8. Dispositif selon les revendications 6 et 7 **caractérisée en ce que** le réglage de ladite molette (2h) déplace en translation longitudinale ladite partie avant (2-2) en matériau compressible de la deuxième pièce (2) et la compressibilité dudit matériau compressible est telle que, lorsque ladite première pièce (1) est en translation de rapprochement maximal par rapport à ladite deuxième pièce, en dite position de fermeture, la compression dudit matériau compressible autorise une avancée de ladite deuxième pièce par réglage de ladite molette.

9. Dispositif selon l'une des revendications 5 à 8 **caractérisée en ce que** ladite première surface de révolution non cylindrique avant (1b) de la face frontale avant (1-1) de ladite première pièce 1, présente des protubérances (1-1a) espacées angulairement le long de ladite surface de révolution non cylindrique avant (1b).

10. Dispositif selon l'une des revendications 5 à 9 **caractérisé en ce que** ladite première surface centrale interne en retrait (1c) coopère avec un premier éjecteur (1d) comprenant des premiers éléments d'appui (1d-1,1d-2,1d-3), ledit premier éjecteur étant monté sur un premier moyen de rappel élastique (1e) exerçant une poussée sur ledit premier éjecteur tels que lesdits premiers éléments d'appui du premier éjecteur sont aptes à être maintenus en avant de ladite première surface centrale (1c) par ledit premier moyen de rappel élastique en dite position d'ouverture et lesdits premiers éléments d'appui du premier éjecteur sont aptes à être ramené au niveau de ladite première surface centrale en retrait lorsqu'ils sont en appui contre la dosette en dite position de fermeture.

11. Dispositif selon la revendication 10 , **caractérisé en ce que** lesdits premiers éléments d'appui (1d-1, 1d-2, 1d-3) sont des branches supérieure (1d-1) et inférieures (1d-2, 1d-3)s'étendant radialement disposées angulairement selon une forme et disposition, de préférence 1 branche supérieure médiane et deux branches inférieure latérales disposées à 120° par rapport à la branche supérieure, telles que :
- en dite position d'ouverture, lors de l'insertion de ladite dosette dans ledit compartiment d'insertion, ladite dosette vient tout d'abord buter seulement contre ladite branche supérieure sans entrer en contact avec lesdites branches inférieures, ladite branche supérieure guidant la chute de la dosette contre ladite surface périphérique arrière (3a) de ladite troisième pièce, et
- en dite position d'ouverture, lorsque la face avant de la partie périphérique bombée (10c) de la pastille remplie de poudre (10a) de ladite dosette est en appui contre ladite surface périphérique arrière (3a) de ladite troisième pièce, en position inclinée dans ledit compartiment d'insertion, la face arrière (10d) de ladite dosette est en contact avec la partie inférieure de ladite surface périphérique non cylindrique de la face avant de ladite première pièce mais sans contact avec ni ladite branche supérieure ni lesdites branches inférieures.

12. Dispositif selon l'une des revendications 5 à 10 **caractérisé en ce que** ladite deuxième surface centrale interne en retrait (2c) comprend ou coopère avec un deuxième éjecteur (2d) comprenant des deuxièmes éléments d'appui (2d-1), ledit deuxième éjecteur étant monté sur des deuxièmes moyens de rappel élastique (2d-3) exerçant une poussée sur ledit deuxième éjecteur tels que lesdits deuxièmes éléments d'appui (2d-1) du deuxième éjecteur en position d'extension, sont aptes à être maintenus en avant de ladite deuxième surface centrale (2c) et/ou dite deuxième plaque perforée (2e) par ledit deuxième moyen de rappel élastique (2d-3) en dite position d'ouverture et lesdits deuxièmes éléments d'appui (2d-1) du deuxième éjecteur sont aptes à être ramenés au niveau de ladite deuxième surface centrale en retrait lorsqu'ils sont en appui contre la dosette en dite position de fermeture.

13. Dispositif selon la revendication 12 **caractérisé en ce que** ledit deuxième éjecteur (2d) comprend une partie avant (2d-1, 2d-5) en matériau élastomère, de préférence en silicone, montée sur une tige rigide (2d-2) apte à coopérer avec lesdits deuxièmes moyens de rappel élastique (2d-3), ladite partie avant du deuxième éjecteur (2d) comprenant une tête formant desdits deuxièmes éléments d'appui (2d-1) en matériau élastomère dont la face arrière est de forme tronconique apte à fermer de manière étanche l'ouverture centrale (2-2d) de ladite partie avant (2-2) de ladite deuxième pièce (2) lorsque ledit deuxième éjecteur (2d) y coulisse jusqu'en dite position de retrait, et ladite face arrière (2d-5) de la partie avant (2-1) du deuxième éjecteur (2d) comprend des moyens de jonction (2d-6) assurant la jonction entre lesdits deuxièmes éléments d'appui (2d-1) avec la face arrière de ladite partie avant (2-2) de ladite deuxième pièce (2), lesdits moyens de jonction (2d-6) en matériau élastomère étant apte à fermer de manière étanche l'ouverture centrale (2-2d) de ladite partie avant (2-2) de ladite deuxième pièce (2) ledit deuxième éjecteur (2d) lorsque ledit deuxième éjecteur (2d) y coulisse jusqu'en dite position d'extension.

14. Dispositif selon l'une des revendications 1 à 13 **caractérisé en ce qu'**en dite position d'insertion, ledit compartiment d'insertion comprend un espace ouvert formant une fente (7) entre la partie inférieure (3a) de la face arrière dudit berceau et la partie inférieure de la face avant (1c) de ladite première pièce, ladite fente étant apte à être traversée par une collerette (10b) de la dosette lorsque la dosette est insérée dans ledit compartiment d'insertion.

15. Dispositif selon l'une des revendications 4 à 14 **caractérisé en ce que** :
- ledit berceau forme un anneau dont l'orifice (3-1) est délimité par une surface arrière périphérique dont la partie supérieure 3-5 présente une demie circonférence oblongue apte à soutenir continument la partie supérieure de ladite collerette (10b) et dont la partie inférieure (3a) présente une demie circonférence inférieure semi circulaire apte à soutenir continument la partie inférieure de la face avant (10c) de la partie pleine bombée de ladite pastille (10a) lorsque ladite dosette est dans le compartiment d'insertion en dite position d'ouverture, ledit orifice étant bordé par deux rebords latéraux (3b) aptes à maintenir latéralement ladite collerette coaxialement audit axe longitudinale (XX') au moins entre lesdites partie supérieure (3-5) et inférieure (3a) de ladite surface arrière périphérique délimitant ledit orifice.

## Patentansprüche

1. Vorrichtung zur Herstellung eines aromatisierten Getränks (11), insbesondere auf Basis von Kaffeearomen, die geeignet ist, Aromen durch Infusion einer diese enthaltenden Pulverkapsel (10) zu extrahieren, wobei die Kapsel eine Form einer flachen oder ovalen Pastille (10a) aufweist, die mit dem Pulver gefüllt ist, wobei die Vorrichtung geeignet ist, die in dem Pulver enthaltenen Aromen zu extrahieren, wenn die Kapsel von einer Flüssigkeit, vorzugsweise Wasser unter Druck, in einer Extraktionskammer durchquert wird, wobei die Vorrichtung umfasst:
- ein erstes Element (1), umfassend einen zylindrischen Vorderteil (1-2), umfassend eine Vorderseite (1-1), umfassend eine erste vordere Umfangsauflagefläche (1a), die eine erste vordere nicht zylindrische Umdrehungsfläche (1b) umgibt, und
- ein zweites Element (2), umfassend einen zylindrischen Vorderteil (2-2) mit derselben axialen Längsachse (XX') wie der zylindrische Vorderteil (1-2) des ersten Elements, umfassend eine Vorderseite (2-1), die gegenüber der Vorderseite (1-1) des ersten Elements angeordnet ist, umfassend eine zweite vordere Umfangsauflagefläche (2a), die eine zweite vordere nicht zylindrische Umdrehungsfläche (2b) umgibt, und
- ein drittes Element (3), das schwenkbar (3-2, 3-3) montiert und geeignet ist, in Bezug zu einer Achse zu schwenken, die sich in eine Querrichtung (YY') senkrecht auf die Längsachse (XX') erstreckt, wobei das dritte Element geeignet ist, synchronisiert mit einer relativen Translation der beiden ersten und zweiten Elemente zu schwenken, wobei das dritte Element eine Öffnung (3-1), die vorzugsweise zumindest teilweise kreisförmig ist, in einer Ebene P umfasst, die sich in eine Querrichtung (YY') erstreckt, die geeignet ist, von dem zylindrischen Vorderteil des ersten Elements (1) durchquert zu werden, wenn sich die Ebene P der Öffnung des dritten Elements in vertikaler Position befindet, und
- Mittel zum Verschieben des ersten Elements (1) und des zweiten Elements (2) und synchronisierten Schwenken des dritten Elements in koaxialer horizontaler (XX') relativer Translation (4) zwischen:
- einer anfänglichen Öffnungs- und Einsetzposition, in der das erste und das zweite Element maximal in Translation (D1) beabstandet sind, wobei das dritte Element in geneigter Position zwischen dem ersten und dem zweiten Element angeordnet ist, wobei die Ebene (P) der Öffnung (3-1) in maximaler Neigungsposition, vorzugsweise um einen Winkel (α) von 10 bis 30° in Bezug zu einer vertikalen Querebene (YZ) senkrecht auf die Längsachse (XX') ist, wobei das dritte Element (3) in maximaler Neigungsposition mit der Vorderseite (1-1) des ersten Elements ein Einsetzabteil (5) bildet, das geeignet ist, die Kapsel aufzunehmen und zu tragen, wobei diese durch Schwerkraft in das im oberen Teil offene Einsetzabteil (3-4) eingesetzt werden kann, und
- einer Verschluss- oder maximalen Annäherungsposition in relativer Translation der beiden ersten und zweiten Elemente, in der die ersten und zweiten Umfangsauflageflächen (1 a, 2a) der Vorderseiten (1-1, 2-1) der ersten und zweiten Elemente aneinander anliegen, wobei die Vorderseite (1-1) des ersten Elements und die Vorderseite (2-1) des zweiten Elements ein dichtes Abteil, Extraktionskammer genannt, begrenzen, in dem die Pastille (10a) komprimiert werden kann, um eine Extraktion durchzuführen, wobei die Ebene P der Öffnung (3-1) in vertikaler Position ist und von mindestens dem zylindrischen Vorderteil (1-2) des ersten Elements in Verschlussposition durchquert wird, und
- einer Wiederöffnungs- und Ableitungsposition durch Beabstandung der beiden ersten und zweiten Elemente, die ein Ableitungsabteil (6) begrenzen, in Translation (D1, D3), wobei das Ableitungsabteil geeignet ist, die Kapsel aufzunehmen, wobei die Kapsel durch Schwerkraft nach einer Extraktion aus dem im unteren Teil offenen Ableitungsabteil ausgegeben werden kann.

2. Vorrichtung nach Anspruch 1, **dadurch gekennzeichnet, dass** sie umfasst:
a- ein erstes Element (1), das geeignet ist, in Translation mit Hilfe der Mittel zur Verschiebung in relativer Translation verschoben zu werden, und
b- ein zweites Element (1-2), das nicht geeignet ist, in Translation mit Hilfe der Mittel zur Verschiebung in relativer Translation verschoben zu werden, und
c- ein drittes Element, das schwenkbar (3-2, 3-3) auf einem gemeinsamen Gestell (8), das die drei Elemente trägt, montiert ist, wobei das erste Element (1) in relativer Translation durch erste Führungselemente (8a), die mit dem Gestell verbunden sind, geführt werden, wobei das dritte Element Führungs- und Schwenkelemente (3-2, 3-3) umfasst, die mit komplementären Führungselementen (8b, 9b), die mit diesem ersten Element (9b) und dem Gestell (8b) verbunden sind, zusammenwirken, so dass die relative Translation des ersten Elements auf einem Teil seines Weges zum Schwenken des dritten Elements führt.

3. Vorrichtung nach Anspruch 2, **dadurch gekennzeichnet, dass** die Führungs- und Schwenk-Einsteckelemente (3-2, 3-3) des dritten Elements mit komplementären Führungs-Aufnahmeelementen in Form einer Nut (8b, 9b) zusammenwirken, die mit dem ersten Element (9b) und dem Gestell (8b) verbunden sind, so dass die relative Translation des ersten Elements auf einem Teil seines Weges zur Translation des dritten Elements gleichzeitig mit der Translation des ersten Elements führt, allerdings ohne Schwenken des dritten Elements, so dass beim Wiederöffnen der Vorrichtung das dritte Element in Translation mit dem ersten Element angetrieben wird, wobei das dritte Element mit der Ebene P seiner Öffnung in vertikaler Position bleibt, bis der Raum (D3) zwischen dem ersten Element und dem zweiten Element größer als die Dicke der Pastille ist.

4. Vorrichtung nach einem der Ansprüche 1 bis 3, **dadurch gekennzeichnet, dass** die Öffnung (3-1) des dritten Elements durch eine hintere Umfangsfläche (3a) des dritten Elements gegenüber dem ersten Element in der anfänglichen Öffnungsposition (1) begrenzt ist, vorzugsweise eine hintere Umfangsfläche, die zumindest teilweise kegelstumpfartig (3a) ist, die geeignet ist, zumindest in ihrem unteren kegelstumpfartigen Teil (3a) den gewölbten Umfangsteil (10c) der mit Pulver (10a) gefüllten Pastille der Kapsel auf einer Vorderseite (10c) der Kapsel zu halten, wobei der obere Teil (3-5) der hinteren Umfangsfläche die Öffnung begrenzt, die den oberen Teil des Kragens (10b) trägt, wobei die Rückseite (10d) desselben gewölbten Umfangsteils (10a) des vollen Teils in Pastillenform der Kapsel in geneigter Position in dem Einsetzabteil an einem unteren Teil derselben vorderen nicht zylindrischen ersten Umdrehungsfläche (1 b) des ersten Elements, die vorzugsweise kegelstumpfartig ist, anliegt.

5. Vorrichtung nach einem der Ansprüche 1 bis 4, **dadurch gekennzeichnet, dass**:
- das erste Element (1) einen Vorderteil mit zylindrischer Außenfläche (1-2) mit einer axialen Längsachse (XX') umfasst, deren vordere Frontseite (1-1) eine erste vordere Umfangsauflagefläche (1a) bildet, die vorzugsweise vertikal ist und eine erste vordere nicht zylindrische Umdrehungsfläche (1b), die vorzugsweise kegelstumpfartig ist, umgibt, wobei die erste vordere nicht zylindrische Umdrehungsfläche (1 b) eine erste zurückgesetzte zentrale Innenfläche (1c) umgibt, wobei die erste zentrale Fläche vorzugsweise noch perforiert oder mit einer ersten perforierten Platte (1c1) bedeckt ist, um das ankommende Wasser unter Druck, das durch die erste zentrale Fläche eingeleitet wird, zu der Extraktionskammer zu verteilen, und
- das zweite Element (2) einen Vorderteil mit zylindrischer Außenfläche (2-2) mit derselben axialen Längsachse (XX') umfasst, deren vordere Frontseite (2-1) eine zweite vordere Umfangsauflagefläche (2a) bildet, die eine zweite vordere nicht zylindrische Umdrehungsfläche (2b), die vorzugsweise kegelstumpfartig ist, umgibt, wobei die zweite vordere nicht zylindrische Umdrehungsfläche (2b) eine zweite zurückgesetzt zentrale Innenfläche (2c) umgibt, wobei die zweite zentrale Fläche vorzugsweise perforiert oder mit einer zweiten perforierten Platte (2e) bedeckt ist, die geeignet ist, die Flüssigkeit nach der Extraktion und vor ihrer Ableitung (2g) durch die zweite Platte zu filtern.

6. Vorrichtung nach einem der Ansprüche 1 bis 5, **dadurch gekennzeichnet, dass** das Volumen der Extraktionskammer in Verschlussposition einstellbar ist, wobei der Vorschub des vorderen Teils (2-2) des zweiten Elements (2) in Längsrichtung (XX') mit einem Regler (2h) unabhängig von der relativen Translation des ersten Elements mit Hilfe der Translationsverschiebemittel (4) eingestellt wird.

7. Vorrichtung nach einem der Ansprüche 1 bis 6, **dadurch gekennzeichnet, dass** der Vorderteil (2-2) des zweiten Elements (2) mindestens einen Teil aus komprimierbarem Material, vorzugsweise aus Elastomermaterial, noch bevorzugter aus Silikon, zumindest in dem Vorderteil (2-2) umfasst, der die zweite vordere Umfangsauflagefläche (2a), zweite vordere nicht zylindrische Umdrehungsfläche (2b) und vorzugsweise einen Umfangsteil der zweiten zurückgesetzten zentralen Fläche (2c) definiert.

8. Vorrichtung nach den Ansprüchen 6 und 7, **dadurch gekennzeichnet, dass** die Einstellung des Reglers (2h) den Vorderteil (2-2) aus komprimierbarem Material des zweiten Elements (2) in Längstranslation verschiebt, und dass die Komprimierbarkeit des komprimierbaren Materials derart ist, dass, wenn sich das erste Element (1) in maximaler Annäherungstranslation zum zweiten Element in Verschlussposition befindet, die Kompression des komprimierbaren Materials einen Vorschub des zweiten Elements durch Einstellung des Reglers gestattet.

9. Vorrichtung nach einem der Ansprüche 5 bis 8, **dadurch gekennzeichnet, dass** die erste vordere nicht zylindrische Umdrehungsfläche (1 b) der vorderen Frontfläche (1-1) des ersten Elements 1 Ausstülpungen (1-1a) aufweist, die im Winkel entlang der vorderen nicht zylindrischen Umdrehungsfläche (1 b) beabstandet sind.

10. Vorrichtung nach einem der Ansprüche 5 bis 9, **dadurch gekennzeichnet, dass** die erste zurückgesetzte zentrale Innenfläche (1c) mit einem ersten Auswerfer (1d) zusammenwirkt, umfassend erste Stützelemente (1d-1, 1d-2, 1d-3), wobei der erste Auswerfer auf einem ersten elastischen Rückstellmittel (1e) montiert ist, das einen Schub auf den ersten Auswerfer ausübt, so dass die ersten Stützelemente des ersten Auswerfers geeignet sind, vor der ersten zentralen Fläche (1 c) durch das erste elastische Rückstellmittel in Öffnungsposition gehalten zu werden, und die ersten Stützelemente des ersten Auswerfers geeignet sind, in den Bereich der ersten zurückgesetzten zentralen Fläche zurückgeführt zu werden, wenn sie an der Kapsel in Verschlussposition anliegen.

11. Vorrichtung nach Anspruch 10, **dadurch gekennzeichnet, dass** die ersten Stützelemente (1 d-1, 1 d-2, 1 d-3) obere (1 d-1) und untere Schenkel (1 d-2, 1 d-3) sind, die sich radial erstrecken und im Winkel nach einer Form und Anordnung, vorzugsweise ein mittlerer oberer Schenkel und zwei seitliche untere Schenkel, die in einem Winkel von 120° zum oberen Schenkel angeordnet sind, angeordnet sind, dass:
- in Öffnungsposition beim Einsetzen der Kapsel in das Einsetzabteil die Kapsel zuerst nur an dem oberen Schenkel zur Anlage gelangt, ohne mit den unteren Schenkeln in Kontakt zu kommen, wobei der obere Schenkel das Fallen der Kapsel gegen die hintere Umfangsfläche (3a) des dritten Elements führt, und
- in Öffnungsposition, wenn die Vorderseite des gewölbten Umfangsteils (10c) der mit Pulver gefüllten Pastille (10a) der Kapsel an der hinteren Umfangsfläche (3a) des dritten Elements anliegt, die Rückseite (10d) der Kapsel mit dem unteren Teil der nicht zylindrischen Umfangsfläche der Vorderseite des ersten Elements in Kontakt ist, aber weder mit dem oberen Schenkel noch mit den unteren Schenkeln in Kontakt ist.

12. Vorrichtung nach einem der Ansprüche 5 bis 10, **dadurch gekennzeichnet, dass** die zweite zurückgesetzte zentrale Innenfläche (2c) einen zweiten Auswerfer (2d) umfasst oder mit einem solchen zusammenwirkt, der zweite Stützelemente (2d-1) umfasst, wobei der zweite Auswerfer auf zweiten elastischen Rückstellmitteln (2d-3) montiert ist, die einen Schub auf den zweiten Auswerfer ausüben, so dass die zweiten Stützelemente (2d-1) des zweiten Auswerfers in ausgefahrener Position geeignet sind, vor der zweiten zentralen Fläche (2c) und/oder zweiten perforierten Platte (2e) durch das zweite elastische Rückstellmittel (2d-3) in Öffnungsposition gehalten zu werden, und dass die zweiten Stützelemente (2d-1) des zweiten Auswerfers geeignet sind, in den Bereich der zweiten zurückgesetzten zentralen Fläche zurückgeführt zu werden, wenn sie an der Kapsel in Verschlussposition anliegen.

13. Vorrichtung nach Anspruch 12, **dadurch gekennzeichnet, dass** der zweite Auswerfer (2d) einen Vorderteil (2d-1, 2d-5) aus Elastomermaterial, vorzugsweise aus Silikon, umfasst, der auf einer starren Stange (2d-2) montiert ist, die geeignet ist, mit den zweiten elastischen Rückstellmitteln (2d-3) zusammenzuwirken, wobei der Vorderteil des zweiten Auswerfers (2d) einen Kopf umfasst, der zweite Stützelemente (2d-1) aus Elastomermaterial bildet, deren Rückseite von kegelstumpfartiger Form ist, die geeignet ist, die zentrale Öffnung (2-2d) des Vorderteils (2-2) des zweiten Elements (2) dicht zu verschließen, wenn der zweite Auswerfer (2d) hier bis in die zurückgesetzte Position gleitet, und die Rückseite (2d-5) des Vorderteils (2-1) des zweiten Auswerfers (2d) Verbindungsmittel (2d-6) umfasst, die die Verbindung zwischen den zweiten Stützelementen (2d-1) und der Rückseite des Vorderteils (2-2) des zweiten Elements (2) gewährleisten, wobei die Verbindungsmittel (2d-6) aus Elastomermaterial geeignet sind, die zentrale Öffnung (2-2d) des Vorderteils (2-2) des zweiten Elements (2) dicht zu verschließen, wenn der zweite Auswerfer (2d) hier bis in die ausgefahrene Position gleitet.

14. Vorrichtung nach einem der Ansprüche 1 bis 13, **dadurch gekennzeichnet, dass** in Einsetzposition das Einsetzabteil einen offenen Raum umfasst, der einen Schlitz (7) zwischen dem Unterteil (3a) der Rückseite des Gestells und dem Unterteil der Vorderseite (1 c) des ersten Teils bildet, wobei der Schlitz geeignet ist, von einem Kragen (10b) der Kapsel durchquert zu werden, wenn die Kapsel in das Einsetzabteil eingesetzt wird.

15. Vorrichtung nach einem der Ansprüche 4 bis 14, **dadurch gekennzeichnet, dass**:
- das Gestell einen Ring bildet, dessen Öffnung (3-1) von einer hinteren Umfangsfläche begrenzt ist, deren Oberteil (3-5) einen halben Längsumfang aufweist, der geeignet ist, kontinuierlich den Oberteil des Kragens (10b) zu halten, und dessen Unterteil (3a) einen halbkreisförmigen halben unteren Umfang aufweist, der geeignet ist, kontinuierlich den Unterteil der Vorderseite (10c) des vollen gewölbten Teils der Pastille (10a) zu halten, wenn die Kapsel in dem Einsetzabteil in Öffnungsposition ist, wobei die Öffnung von zwei Seitenrändern (3b) umrandet ist, die geeignet sind, seitlich den Kragen koaxial zu der Längsachse (XX') zumindest zwischen den oberen (3-5) und unteren Teilen (3a) der die Öffnung begrenzenden Umfangsrückseite zu halten.

## Claims

1. A device for preparing a flavored beverage (11), notably based on coffee flavors, able to extract flavors by infusion of a powder pod (10) containing some of them, said pod having the shape of a flat or ovoidal pastille (10a), filled with said powder, the device being able to extract the flavors contained in said powder when said pod is crossed by a liquid, preferably pressurized water, in an extraction chamber, said device comprising:
- a first part (1) comprising a cylindrical front portion (1-2) comprising a front face (1-1) comprising a first front peripherally supporting surface (1a), surrounding a first front non-cylindrical axisymmetrical surface (1b), and
- a second part (2) comprising a front cylindrical portion (2-2) of the same axial longitudinal axis (XX') as the front cylindrical portion (1-2) of said first part, comprising a front face (2-1) positioned facing the front face (1-1) of the first part, comprising a second front peripherally supporting surface (2a) surrounding a second front non-cylindrical axisymmetrical surface (2b), and
- a third part (3) pivotally mounted (3-2, 3-3) able to pivot with respect to an axis extending in a transverse direction (YY') perpendicular to said longitudinal axis (XX'), said third part being able to synchronously pivot with relative translation of both first and second parts, said third part comprising an orifice (3-1), preferably at least partly circular, in a plane P extending in a said transverse direction (YY'), able to be crossed by said front cylindrical portion of said first part (1) when said plane P of said orifice of said third part is in a vertical position, and
- means for displacement in a coaxial horizontal (XX') relative translation (4) of said first part (1) and second part (2) and for synchronized pivoting of said third part, between:
- an initial opening and insertion position in which said first and second parts are at a maximum distance from each other in translation (D1), said third part being located in a tilted position between said first and second parts, the plane (P) of said orifice (3-1) being in a position of maximum tilt, preferably by an angle (α) from 10 to 30°, with respect to a transverse vertical plane (YZ) perpendicular to said longitudinal axis (XX'), said third part (3) in a maximum tilt position, delimiting with the front face (1-1) of said first part and insertion compartment (5) able to receive and support said pod, the latter being able to be inserted by gravity into said insertion compartment open in the upper portion (3-4), and
- a position for closing or for maximum approach in relative translation of both first and second parts in which said first and second peripherally supporting surfaces (1a, 2a) of said front faces (1-1, 2-1) of said first and second parts bear against each other, said front faces (1-1) of said first part and front face (2-1) of said second part delimiting a sealed compartment, called an extraction chamber, inside which said pastille (10a) is able to be compressed for producing a said extraction, the plane P of said orifice (3-1) being in a vertical position and crossed by at least said front cylindrical portion (1-2) of said first part in a said closing position, and
- a position for reopening and discharging by translationally moving them away (D1, D3) both first and second parts delimiting a discharging compartment (6), said discharging compartment being able to receive said pod, said pod being able to be discharged by gravity after a said extraction out of said discharging compartment open in the lower portion.

2. The device according to claim 1, **characterized in that** it includes:
a- a said first part (1) able to be moved in translation by said relative translation displacement means, and
b- a said second part (1-2) which is not able to be displaced in translation by said relative translation displacement means, and
c- a said third part pivotally mounted (3-2, 3-3) on a common chassis (8) supporting the three parts; said first part (1) being guided in relative translation by first guiding elements (8a) secured to said chassis, said third part comprising guiding and pivoting elements (3-2, 3-3), co-operating with additional guiding elements (8b, 9b) secured to said first part (9b) and to said chassis (8b), so that said relative translation of the first part on a portion of its travel causes said pivoting of said third part.

3. The device according to claim 2, **characterized in that** said male pivoting and guiding elements (3-2, 3-3) of said third part cooperate with said groove-shaped mating female guiding elements (8b, 9b) secured to said first part (9b) and to said chassis (8b) so that said relative translation of the first part on a portion of its travel causes translation of said third part simultaneously with the translation of said first part but without any pivoting of said third part so that upon reopening of said device, said third part is driven into translation with said first part, said third part remaining with the plane P of its said orifice in a vertical position until the space (D3) between said first part and said second part is greater than the thickness of said pastille.

4. The device according to one of claims 1 to 3, **characterized in that** said orifice (3-1) of said third part is delimited by a rear peripheral surface (3a) of said third part facing said first part in a said initial opening position (1), preferably an at least partly frusto-conical rear peripheral surface (3a), able to at least support in its frusto-conical lower portion (3a) the convex peripheral portion (10c) of the pastille filled with powder (10a) from said pod on a front face (10c) of the pod, the upper portion (3-5) of said rear peripheral surface delimiting said orifice supporting the upper portion of the flange (10b), the rear face (10d) of the same convex peripheral portion (10a) of the solid pastille-shaped portion of said pod in a tilted position in said insertion compartment bearing against a lower portion of said first front non-cylindrical axisymmetrical surface (1b), preferably frusto-conical, of said first part.

5. The device according to one of claims 1 to 4, **characterized in that**:
- said first part (1) comprises a front portion with an external cylindrical surface (1-2) with an axial longitudinal axis (XX'), the front face (1-1) of which forms a first front peripherally supporting surface (1a), preferably vertical, surrounding a first front non-cylindrical axisymmetrical surface (1b), preferably frusto-conical, said first front non-cylindrical axisymmetrical surface (1b) surrounding a first set-back internal central surface (1c), said first central surface being preferably further perforated or covered with a first perforated plate (1c1) for distributing the pressurized water supply injected through said first central surface towards said extraction chamber, and
- said second part (2) comprises a front portion with an external cylindrical surface (2-2) with the same axial longitudinal axis (XX'), the front face (2-1) of which forms a second front peripherally supporting surface (2a) surrounding a second front non-cylindrical axisymmetrical surface (2b), preferably frusto-conical, said second front non-cylindrical axisymmetrical surface (2b) surrounding a second set-back internal central surface (2c), said second central surface preferably being perforated or covered with a second perforated plate (2e) able to filter the liquid after said extraction and before its discharge (2g) through said second part.

6. The device according to one of claims 1 to 5, **characterized in that** the volume of the extraction chamber in a said closing position is adjustable by adjusting the advance of said front portion (2-2) of the second part (2) in said longitudinal direction (XX') with a thumbwheel (2h), independently of said relative translation of said first part by said translational displacement means (4).

7. The device according to one of claims 1 to 6, **characterized in that** said front portion (2-2) of said second part (2) comprises at least one portion in a compressible material, preferably in an elastomeric material, still preferably in silicone, at least in said front portion (2-2) defining said second front peripherally supporting surface (2a), second front non-cylindrical axisymmetrical surface (2b), and preferably at least one peripheral portion of said set-back central surface (2c).

8. The device according to claims 6 and 7, **characterized in that** the adjustment of said thumbwheel (2h) displaces in longitudinal translation said front portion (2-2) in a compressible material of the second part (2) and the compressibility of said compressible material is such that, when said first part (1) is in translation for maximum approach of said second part, in a said closing position, the compression of said compressible material allows advance of said second part by adjustment of said thumbwheel.

9. The device according to one of claims 5 to 8, **characterized in that** said first front non-cylindrical axisymmetrical surface (1b) of the front face (1-1) of said first part (1), has protrusions (1-1a) angularly spaced apart along said front non-cylindrical axisymmetrical surface (1b).

10. The device according to one of claims 5 to 9, **characterized in that** said first set-back internal central surface (1c) co-operates with a first ejector (1d) comprising first supporting elements (1d-1, 1d-2, 1d-3), said first ejector being mounted on a first elastic return means (1e) exerting a thrust on said first ejector such that said first supporting elements of the first ejector are able to be maintained in front of said first central surface (1c) by said first elastic return means in a said opening position and said first supporting elements of the first ejector are able to be brought back to the level of said first set-back central surface when they are bearing against the pod in a said closing position.

11. The device according to claim 10, **characterized in that** said first supporting elements (1d-1, 1d-2, 1d-3) are upper (1d-1) and lower (1d-2, 1d-3) branches extending radially and angularly positioned according to a shape and arrangement, preferably one middle upper branch and two side lower branches positioned at 120° with respect to the upper branch, such that:
- in a said opening position, upon inserting said pod into said insertion compartment, said pod will first of all only abut against said upper branch without coming into contact with said lower branches, said upper branch guiding the fall of the pod against said rear peripheral surface (3a) of said third part, and
- in a said opening position, when the front face of the convex peripheral portion (10c) of the pastille filled with powder (10a) from said pod is bearing against said rear peripheral surface (3a) of said third part, in a tilted position in said insertion compartment, the rear face (10d) of said pod is in contact with the lower portion of said non-cylindrical peripheral surface of the front face of said first part but without any contact with either said upper branch or said lower branches.

12. The device according to one of claims 5 to 10, **characterized in that** said second set-back internal central surface (2c) comprises or cooperates with a second ejector (2d) comprising second supporting elements (2d-1), said second ejector being mounted on second elastic return means (2d-3) exerting a thrust on said second ejector such that said second supporting elements (2d-1) of the second ejector in an extension position, are able to be maintained in front of said second central surface (2c) and/or said second perforated plate (2e) by said second elastic return means (2d-3) in a said opening position and said second supporting elements (2d-1) of the second ejector are able to be brought back to the level of said second set-back central surface when they are bearing against the pod in a said closing position.

13. The device according to claim 12, **characterized in that** said second ejector (2d) comprises a front portion (2d-1, 2d-5) in an elastomeric material, preferably in silicone, mounted on a stiff rod (2d-2) able to cooperate with said second elastic return means (2d-3), said front portion of the second ejector (2d) comprising a head forming said second supporting elements (2d-1) in an elastomeric material, the rear face of which is of a frusto-conical shape able to sealably close the central aperture (2-2d) of said front portion (2-2) of said second part (2) when said second ejector (2d) slides therein as far as in a said withdrawal position, and said rear face (2d-5) of the front portion (2-1) of the second ejector (2d) comprises junction means (2d-6) ensuring the junction between said second supporting elements (2d-1) with the rear face of said front portion (2-2) of said second part (2), said junction means (2d-6) in an elastomeric material being able to sealably close the central aperture (2-2d) of said front portion (2-2) of said second part (2), said second ejector (2d) when said second ejector (2d) slides therein as far as in a said extension position.

14. The device according to one of claims 1 to 13, **characterized in that**, in a said insertion position, said insertion compartment comprises an open space forming a slot (7) between the lower portion (3a) of the rear face of said cradle and the lower portion of the front face (1c) of said first part, said slot being able to be crossed by a flange (10b) of the pod when the pod is inserted into said insertion compartment.

15. The device according to one of claims 4 to 14, **characterized in that**:
- said cradle forms a ring, the orifice (3-1) of which is delimited by a rear peripheral surface, the upper portion (3-5) of which has an oblong half-circumference able to continuously support the upper portion of said flange (10b) and the lower portion (3a) of which has a semicircular lower half-circumference able to continuously support the lower portion of the front face (10c) of the convex solid portion of said pastille (10a) when said pod is in the insertion compartment in a said opening position, said orifice being bordered by two side edges (3b) capable of actually maintaining said flange coaxially with said longitudinal axis (XX') at least between said upper (3-5) and lower (3a) portions of said rear peripheral surface delimiting said orifice.
